(19)
Europäisches
Patentamt
European
Patent Office
Office européen
des brevets

(11) **EP 1 811 706 B1**

(12) **EUROPEAN PATENT SPECIFICATION**

(45) Date of publication and mention of the grant of the patent:
**21.08.2013 Bulletin 2013/34**

(51) Int Cl.:
***H04L 1/00*** *(2006.01)* ***H04B 7/08*** *(2006.01)*

(21) Application number: **06022151.2**

(22) Date of filing: **23.10.2006**

(54) **Method and system for an improved cellular interference cancelling diversity receiver**

Methode und System für Zellular- Diversitätsempfänger mit verbesserter Interferenzunterdrückung

Système et méthode pour récepteur cellulaire en diversité avec suppression d'interférence améliorée

(84) Designated Contracting States:
**DE FR GB**

(30) Priority: **18.01.2006 US 759833 P**
**11.09.2006 US 518751**

(43) Date of publication of application:
**25.07.2007 Bulletin 2007/30**

(73) Proprietor: **Broadcom Corporation**
**Irvine, CA 92617 (US)**

(72) Inventors:
- **Heiman, Arie**
**Irvine**
**California 92618-7013 (US)**
- **Sollenberger, Nelson**
**Irvine**
**California 92618-7013 (US)**

(74) Representative: **Jehle, Volker Armin et al**
**Bosch Jehle Patentanwaltsgesellschaft mbH**
**Flüggenstrasse 13**
**80639 München (DE)**

(56) References cited:
**WO-A1-99/21296** **WO-A1-2004/102889**
**US-A- 6 144 669** **US-A1- 2004 128 609**

EP 1 811 706 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

CROSS-REFERENCE TO RELATED APPLICATIONS/INCORPORATION BY REFERENCE

This patent application makes reference to, claims priority to and claims benefit from United States Provisional Patent Application Serial No. 60/759,833 filed on January 18, 2006.

The application makes reference to:

United States Application Serial No. 11/189,509 filed on July 26, 2005; and
United States Application Serial No. 11/189.634 filed on July 26, 2005.

FIELD OF THE INVENTION

Certain embodiments of the invention relate to receivers utilized in wired and wireless communication systems. More specifically, certain embodiments of the invention relate to a method and system for an improved cellular interference cancelling diversity receiver.

BACKGROUND OF THE INVENTION

In some conventional receivers, improvements may require extensive system modifications that may be very costly and, in some cases, may even be impractical. Determining the right approach to achieve design improvements may depend on the optimization of a receiver system to a particular modulation type and/or to the various kinds of noises that may be introduced by a transmission channel. For example, the optimization of a receiver system may be based on whether the signals being received, generally in the form of successive symbols or information bits, are interdependent. Signals received from, for example, a convolutional encoder, may be interdependent signals, that is, signals with memory. In this regard, a convolutional encoder may generate NRZI or continuous-phase modulation (CPM), which is generally based on a finite state machine operation.

One method or algorithm for signal detection in a receiver system that decodes convolutional encoded data is maximum-likelihood sequence detection or estimation (MLSE). The MLSE is an algorithm that performs soft decisions while searching for a sequence that minimizes a distance metric in a trellis that characterizes the memory or interdependence of the transmitted signal. In this regard, an operation based on the Viterbi algorithm may be utilized to reduce the number of sequences in the trellis search when new signals are received.

Another method or algorithm for signal detection of convolutional encoded data that makes symbol-by-symbol decisions is maximum a posteriori probability (MAP). The optimization of the MAP algorithm is based on minimizing the probability of a symbol error. In many instances, the MAP algorithm may be difficult to implement because of its computational complexity.

Improvements in the design and implementation of optimized receivers for decoding convolutional encoded data may require modifications to the application of the MLSE algorithm, the Viterbi algorithm, and/or the MAP algorithm in accordance with the modulation method utilized in signal transmission.

Signals from other users may be received by a base station when it selectively receives a signal for a particular user mobile terminal. The signals from other users may be represented as additive noise, which may reduce the SNR value associated with the signal for the particular user.

WO 2004/102889 A1 and US 2006/0189352 A1 whereon the preamble of claim 1 is based describe an apparatus constituting a radio LAN system that, when used in a base station (or a radio terminal), utilizes a plurality of communication channels to realize a wideband. The apparatus includes a plurality of physical layers that correspond to the respective ones of the plurality of communication channels and that transmit/receive radio signals based on the existing IEEE 802.11 by use of the respective corresponding communication channels. The apparatus also includes a MAC that divides, in accordance with the transmission rates of the respective physical layers , all of data frames, which are based on the existing IEEE 802.11, in incoming order to distribute the divided data frames such that the burst times between communication channels become equal for the respective physical layers, during transmission. The MAC, during reception, couples the frames received via the plurality of communication channels by use of processes opposite to those used during transmission.

US 6 144 669 describes a method and apparatus for prioritization, multiple queuing and selective processing of permanent virtual circuit (PVC) management frames by a Frame Relay message processing device. The device has an input port for receiving the messages. It also provides a number of message queues for storing and retrieving the received messages, each of the queues respectively corresponding to one of a number of response priority levels which vary from highest priority to lowest priority. Each of the response priority levels is assigned to a number of message classes associated with predetermined link management processes for communicating the status of message relay links among networking devices. The message processing device has a first processor for determining the message class associated with each of the received messages and for allocating each of the messages to a corresponding one of the queues based upon the response priority level assigned to the determined message class. A second processor is provided for retrieving each of the messages from the queues, and an output port is provided for dispatching the retrieved messages.

The limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A method and/or system for an improved cellular interference cancelling diversity receiver, substantially as shown in and/or described in connection with at least one of the figures, as set forth more completely in the claims.

According to an aspect of the invention, a method for signal processing is provided, the method comprising:

receiving a plurality of individual path signals associated with a multipath cluster for each of a plurality of mobile terminals;
selecting at least a portion of said plurality of individual path signals for at least one of said plurality of mobile terminals;
generating at least one intermediate decoded bit sequence based on said selecting;
generating a combined version of said selected at least a portion of said plurality of individual path signals; and
generating at least one decoded output bit sequence by a frame process based on at least one of: said at least one intermediate decoded bit sequence, and said combined version of said selected at least a portion of said plurality of individual path signals.

Advantageously, said selecting comprises multiple access interference (MAI) suppression.

Advantageously, said selecting comprises at least one of: minimum mean squared error (MMSE) detection, and successive interference cancellation (SIC) detection.

Advantageously, the method comprises computing at least one channel estimate for each of said plurality of individual path signals for each of said plurality of mobile terminals.

Advantageously, the method comprises computing at least one of: a feedforward matrix, and a feedback matrix based on said computed said at least one channel estimate.

Advantageously, the method comprises generating at least one matched filter based on said at least one of: said feedforward matrix, and said feedback matrix.

Advantageously, said selecting is based on said at least one matched filter.

Advantageously, said plurality of individual path signals for said at least one of said plurality of mobile terminals comprises at least 3 signals.

Advantageously, the method comprises combining at least a portion of said plurality of individual path signals.

Advantageously, the method comprises generating a received bit sequence based on said combining.

Advantageously, the method comprises comparing a redundancy verification parameter computed based on said received bit sequence and a redundancy verification parameter computed based on said at least one intermediate decoded bit sequence.

Advantageously, said redundancy verification parameter is a cyclical redundancy check (CRC).

Advantageously, the method comprises selecting at least one of: a frame comprising said received bit sequence, and a frame comprising said at least one intermediate decoded bit sequence based on said comparing.

Advantageously, said selecting is based on constraints analysis based on data contained in said at least one of: said frame comprising said received bit sequence, and said frame comprising said at least one intermediate decoded bit sequence.

Advantageously, the method comprises generating said at least one decoded output bit sequence based on said selected said at least one of: said frame comprising said received bit sequence, and said frame comprising said at least one intermediate decoded bit sequence.

According to an aspect of the invention, a system for signal processing is provided, the system comprising:

at least one circuit that enables reception of a plurality of individual path signals associated with a multipath cluster for each of a plurality of mobile terminals;
said at least one circuit enables selection of at least a portion of said plurality of individual path signals for at least one of said plurality of mobile terminals;
said at least one circuit enables generation of at least one intermediate decoded bit sequence based on said selection;
said at least one circuit enables generation of a combined version of said selected at least a portion of said plurality of individual path signals; and
said at least one circuit enables generation of at least one decoded output bit sequence by a frame process based on at least one of: said at least one intermediate decoded bit sequence, and said combined version of said selected at least a portion of said plurality of individual path signals.

Advantageously, said selection comprises multiple access interference (MAI) suppression.
Advantageously, said selection comprises at least one of: minimum mean squared error (MMSE) detection, and successive interference cancellation (SIC) detection.
Advantageously, said at least one circuit enables computation of at least one channel estimate for each of said plurality of individual path signals for each of said plurality of mobile terminals.
Advantageously, said at least one circuit enables computation of at least one of:

a feedforward matrix, and a feedback matrix based on said computed said at least one channel estimate.

Advantageously, said at least one circuit enables generation of at least one matched filter based on said at least one of: said feedforward matrix, and said feedback matrix.
Advantageously, said selection is based on said at least one matched filter.
Advantageously, said plurality of individual path signals for said at least one of said plurality of mobile terminals comprises at least 3 signals.
Advantageously, said at least one circuit enables combination of at least a portion of said plurality of individual path signals.
Advantageously, said at least one circuit enables generation of a received bit sequence based on said combination.
Advantageously, said at least one circuit enables comparison of a redundancy verification parameter computed based on said received bit sequence and a redundancy verification parameter computed based on said at least one intermediate decoded bit sequence.
Advantageously, said redundancy verification parameter is a cyclical redundancy check (CRC).
Advantageously, said at least one circuit enables selection of at least one of: a frame comprising said received bit sequence, and a frame comprising said at least one intermediate decoded bit sequence based on said comparison.
Advantageously, said selection is based on constraints analysis based on data contained in said at least one of: said frame comprising said received bit sequence, and said frame comprising said at least one intermediate decoded bit sequence.
Advantageously, said at least one circuit enables generation of said at least one decoded output bit sequence based on said selection of said at least one of: said frame comprising said received bit sequence, and said frame comprising said at least one intermediate decoded bit sequence.
The advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1A is a diagram illustrating exemplary reception of a multipath cluster at a base station in a system for an improved cellular interference cancelling diversity receiver, in accordance with an embodiment of the invention.
FIG. 1B is a diagram illustrating exemplary multiple access interference at a base station in a system for an improved cellular interference cancelling diversity receiver, in accordance with an embodiment of the invention.
FIG. 2 is a block diagram illustrating exemplary functions performed by a mobile terminal and a base station in a system for an improved cellular interference cancelling diversity receiver, in accordance with an embodiment of the invention.
FIG. 3 is a block diagram illustrating exemplary demodulation and diversity processing functions performed by a base station in a system for an improved cellular interference cancelling diversity receiver, in accordance with an embodiment of the invention.
FIG. 4A is a block diagram illustrating a multilayer system for improving decoding, in accordance with an embodiment of the invention.
FIG. 4B is a block diagram illustrating an iterative multilayer approach for improving decoding, in accordance with an embodiment of the invention.
FIG. 5 is a block diagram illustrating a multilayer system with a processor and memory for improving decoding, in accordance with an embodiment of the invention.
FIG. 6A is a diagram illustrating exemplary combined frame and burst processes in GSM applications, in accordance with an embodiment of the invention.

FIG. 6B is a diagram illustrating exemplary iterative frame and burst processes in GSM applications, in accordance with an embodiment of the invention.

FIG. 7 is a block diagram illustrating exemplary non-causal iterative system, in accordance with an embodiment of the invention.

FIG. 8 is a block diagram illustrating exemplary implementation of a second burst process iteration based on a gradient search approach, in accordance with an embodiment of the invention.

FIG. 9 is a flow diagram illustrating exemplary steps in the application of redundancy to a multilayer process, in accordance with an embodiment of the invention.

FIG. 10 is a flow diagram illustrating exemplary steps in the application of a constraint algorithm to a received frame, in accordance with an embodiment of the invention.

FIG. 11 is a flow diagram illustrating exemplary steps in the iterative multilayer approach for improving decoding, in accordance with an embodiment of the invention.

DETAILED DESCRIPTION OF THE INVENTION

Certain embodiments of the invention provide a method and system for an improved cellular interference cancelling diversity receiver. The cellular diversity receiver may utilize any of a plurality of decision feedback detection (DFD) methods to reduce multiple access interference (MAI) in signals received from transmitting terminals selected from a plurality of transmitting terminals, which may simultaneously communicate with the cellular diversity receiver. An exemplary transmitting terminal may be a mobile terminal in a wireless communication network. An exemplary cellular diversity receiver may be a base station.

The cellular diversity receiver may combine signal energy from at least a portion of a plurality of signals, x[1], x[2], ..., x[K] in a multipath cluster, transmitted by a selected mobile terminal. The reception of at least 2 of the plurality of signals x[1], x[2], ..., x[K] may be referred to as receiver diversity. The cellular diversity receiver may detect data contained in a signal generated by combining signal energies based on a multilayer decoding process. The multilayer decoding process may comprise a burst process and a frame process. Results from a first burst process may be utilized to generate a decoded bit sequence in the frame process. The frame process may utilize redundancy information and physical constraints to improve the performance of a decoding algorithm. In some voice applications, the decoding algorithm may utilize, for example, a Viterbi algorithm. Results from the frame process may be fed back for a second iteration of the burst process and the frame process, to further improve the decoding operation. In some instances, the second iteration of the burst process may be based on a gradient search approach.

Various embodiments of the invention may utilize a plurality of DFD methods, comprising parallel DFD (P-DFD), and/or successive DFD (S-DFD). An exemplary P-DFD method may comprise a minimum mean squared error (MMSE) method. An exemplary S-DFD method may comprise successive interference cancellation (SIC).

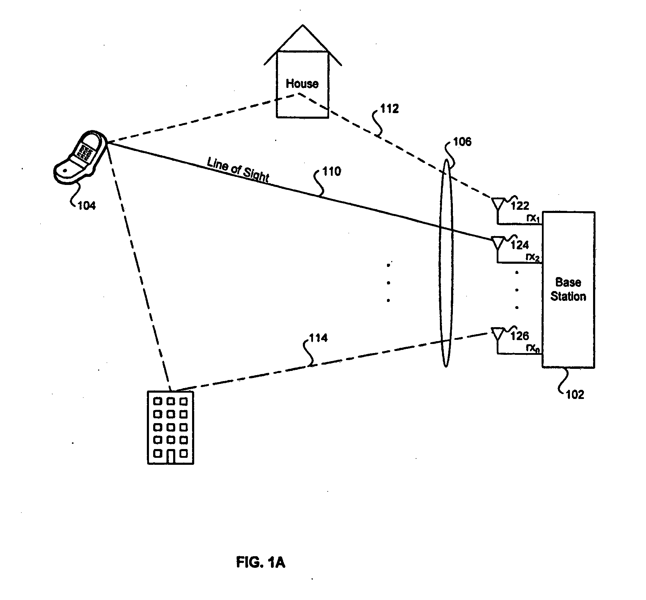

FIG. 1A is a diagram illustrating exemplary reception of a multipath cluster at a base station in a system for an improved cellular interference cancelling diversity receiver, in accordance with an embodiment of the invention. Referring to FIG. 1A, there is shown a base station 102, a plurality of receiving antennas 122, 124, ..., 126, a mobile terminal 104, and a multipath cluster 106. The multipath cluster 106 may comprise a plurality of individual path signals 110, 112, ..., 114. The individual path signals 110, 112, ..., 114 may travel via a wireless communication medium between the mobile terminal 104 and the base station 102. One of the individual path signals 110 may represent a direct line of sight route between the mobile terminal 104 and the base station 102, other individual path signals may represent routes through which the signal is reflected from one or more objects in the uplink path between the mobile terminal 104 and the base station 102. For example, the individual path signal 112 may follow a route through which the signal is reflected by a house, while the individual path signal 114 may follow a route whereby the signal is reflected by a building. The receiving antenna 122 may be utilized to receive the individual path signal 112. The receiving antenna 124 may be utilized to receive the individual path signal 110. The receiving antenna 126 may be utilized to receive the individual path signal 114.

The mobile terminal 104 may transmit a signal x, at a given time instant, comprising a given total signal energy. The signal x may be scattered to generate a plurality of individual path signals 110, 112, ..., 114. Each of the individual path signals 110, 112, ..., 114, may comprise a portion of the total signal energy such that the sum of the signal energies for the plurality of individual path signals may equal the total signal energy for the signal x. The plurality of individual path signals 110, 112, ..., 114 may be represented as a plurality of K individual path signals x[1], x[2], ..., x[K].

The base station 102 may receive a corresponding plurality of signals y[1], y[2], ..., y[K] where each signal y[i] may be represented as in the following equation:

$$y[i] = h[i] \cdot x[i] + n_c[i] \qquad \text{Equation [1]}$$

where i may represent an index with values that span a range from 1 to K, H[i] may represent one or more channel estimates associated with the wireless communication medium, and $n_c[i]$ may represent noise associated with the route taken by the $i^{th}$ individual path signal through the wireless communication medium. The SNR for the $i^{th}$ individual path signal, y[i] may be represented as in the following equation:

$$SNR[i] = \frac{h[i] \cdot x[i]}{n_c[i]} \qquad \text{Equation [2]}$$

In various embodiments of the invention, the base station 102 may combine at least a portion of the received signals to generate a combined signal y, as represented in the following equation:

$$y = \sum_{j=1}^{L} w_j \cdot h[j] \cdot x'[j] + \sum_{j=1}^{L} w_j \cdot n_c[j] \qquad \text{Equation [3]}$$

where $w_j$ may represent one of a plurality of weighting factors. The base station 102 may select a plurality of L signals from the plurality of individual path signals x[1], x[2], ..., x[K], where the value L is not greater than the value K, and apply a plurality of weighting factors $w_j$, to the selected plurality of individual path signals x'[1], x'[2], ..., x'[L]. In an exemplary EGC embodiment of the invention, each of the values $w_j$ may be equal. In an exemplary MRC embodiment of the invention, each of the values $w_j$ may be determined based a value associated with the corresponding received signal y[j].

In general, the base station 102 may utilize criteria to individually determine values for each of the weighting factors. In various embodiments of the invention, a value for any one of the weighting factors, $w_j$, may be nonzero, or equal to zero based on the criteria. For example, an exemplary criteria may utilize a threshold value for a selected individual path signal such that, for an individual path signal x'[j] whose energy level is less than the threshold value, the corresponding weighting factor $w_j$ may be equal to 0, wherein for an individual path signal x'[j] whose energy level is not less than the threshold value, the corresponding weighting factor $w_j$ may be nonzero.

When each of the plurality noise components $n_c[1]$, $n_c[2]$, ..., $n_c[L]$ comprise additive Gaussian white noise (AWGN), for example, the weighted individual components $n_c[j]$, represented in the second term in Equation [3], may be combined noncoherently. Consequently, the total value of the second term in Equation [3] may be less than the value of at least one of the plurality of the individual noise components $n_c[1]$, $n_c[2]$, ..., $n_c[L]$. By contrast, the weighted individual path signals x'[j], represented in the first term in Equation [3], may be combined coherently. Consequently, the total value of the first term in Equation [3] may be greater than the value of each one of the plurality of selected individual path signals x'[1], x'[2], ..., x'[L].

As a result, the SNR associated with the combined signal, y, may be greater than the SNR associated with each of the individual path signals y[i] as represented in the following equation:

$$\frac{\sum_{j=1}^{L} w_j \cdot h[j] \cdot x'[j]}{\sum_{j=1}^{L} w_j \cdot n_c[j]} > \frac{h[i] \cdot x[i]}{n_c[i]} \qquad \text{Equation [4]}$$

where the left hand term in Equation [4] may represent the SNR associated with the combined signal, y, and the right hand term in Equation [4] may represent the SNR associated with an individual path signal y[i].

In various embodiments of the invention, receiver sensitivity at a base station 102 may be improved by combining signal energy for at least a portion of the plurality of individual path signals 110, 112, ..., 114, in the multipath cluster 106, based on Equation [4].

Various embodiments of the invention may be utilized when there is channel fading in the wireless communication medium. In a channel fading environment, the combining of signal energy, as in Equation [3], may comprise suitable phase rotations of each of the plurality of individual path signals 110, 112, ..., 114 to compensate for channel fading for the route taken by each signal between the mobile terminal 104 and the base station 102. The suitable phase rotations may be incorporated in the corresponding channel estimates h.

Various embodiments of the invention may be utilized in a Rayleigh fading environment, and/or in a Ricean fading environment.

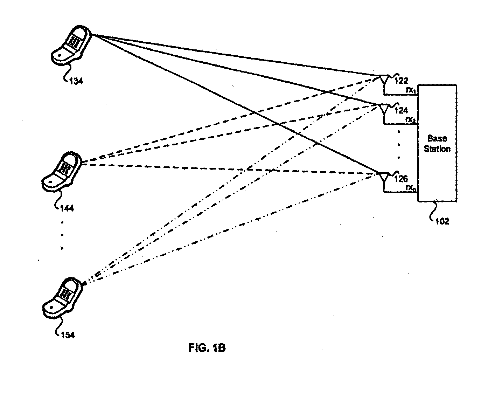

FIG. 1B is a diagram illustrating exemplary multiple access interference at a base station in a system for an improved cellular interference cancelling diversity receiver, in accordance with an embodiment of the invention. Referring to FIG. 1B, there is shown a base station 102, a plurality of receiving antennas 122, 124, ..., 126, and a plurality of mobile terminals 134, 144, ..., 154. The plurality of mobile terminals 134, 144, ..., 154 may represent a plurality of M mobile terminals, where M may represent a number.

Each of the mobile terminals 134, 144, ..., 154, may transmit a signal cluster, comprising a plurality of individual path signals. At least a portion of the plurality of individual path signals transmitted by mobile terminal 134 may be received at the base station 102 by the plurality of receiving antennas 122, 124, ..., 126. The mobile terminal 134 may transmit a signal x[1], and utilize a scrambling code p[1]. At least a portion of the plurality of individual path signals transmitted by mobile terminal 144 may be received at the base station 102 by the plurality of receiving antennas 122, 124, ..., 126. The mobile terminal 144 may transmit a signal x[2], and utilize a scrambling code p[2] . At least a portion of the plurality of individual path signals transmitted by mobile terminal 154 may be received at the base station 102 by the plurality of receiving antennas 122, 124, ..., 126. The mobile terminal 154 may transmit a signal x[M], and utilize a scrambling code p[M].

The base station 102 may receive a plurality of signals at the plurality of receiving antennas 122, 124, ..., 126, transmitted by the plurality of mobile terminals 134, 144, ..., 154, which may be represented using matrix notation in the following equation:

$$\mathbf{Y} = \mathbf{H} \cdot \mathbf{X} + \mathbf{N} \qquad \text{Equation [5a]}$$

where Y may be represented by a vector comprising the plurality of signals received by the corresponding plurality of receiving antennas:

$$\mathbf{Y} = \begin{bmatrix} y_1 \\ y_2 \\ \vdots \\ y_n \end{bmatrix} \qquad \text{Equation [5b]}$$

where $y_1$ may correspond to a signal received at receiving antenna 122, $y_2$ may correspond to a signal received at receiving antenna 124, and $y_n$ may correspond to a signal received at receiving antenna 126. X may be represented by a vector comprising the plurality of signals transmitted by the corresponding plurality of mobile terminals 134, 144, ..., 154:

$$\mathbf{X} = \begin{bmatrix} x_1 \\ x_2 \\ \vdots \\ x_M \end{bmatrix} \qquad \text{Equation [5c]}$$

where $x_1$ may correspond to a signal transmitted by the mobile terminal 134, $x_2$ may correspond to a signal transmitted by the mobile terminal 144, and $y_M$ may correspond to a signal transmitted by the mobile terminal 154. H may be represented by a matrix comprising computed channel estimates for each individual path signal, transmitted by the plurality of mobile terminals 134, 144, ..., 154, and received by the plurality of receiving antennas 122, 124, ..., 126:

$$H = \begin{bmatrix} h_{11} & h_{12} & \cdots & h_{1M} \\ h_{21} & h_{22} & \cdots & h_{2M} \\ & \vdots & & \\ h_{n1} & h_{n2} & & h_{nM} \end{bmatrix} \qquad \text{Equation [5d]}$$

where $h_{11}$ may correspond to a channel estimate for an individual path signal transmitted by mobile terminal 134 and received at receiving antenna 122. $h_{12}$ may correspond to a channel estimate for an individual path signal transmitted by mobile terminal 134 and received at receiving antenna 124. $h_{1M}$ may correspond to a channel estimate for an individual path signal transmitted by mobile terminal 134 and received at receiving antenna 126. $h_{21}$ may correspond to a channel estimate for an individual path signal transmitted by mobile terminal 144 and received at receiving antenna 122. $h_{22}$ may correspond to a channel estimate for an individual path signal transmitted by mobile terminal 144 and received at receiving antenna 124. $h_{2M}$ may correspond to a channel estimate for an individual path signal transmitted by mobile terminal 144 and received at receiving antenna 126. $h_{n1}$ may correspond to a channel estimate for an individual path signal transmitted by mobile terminal 154 and received at receiving antenna 122. $h_{n2}$ may correspond to a channel estimate for an individual path signal transmitted by mobile terminal 154 and received at receiving antenna 124. $h_{nM}$ may correspond to a channel estimate for an individual path signal transmitted by mobile terminal 154 and received at receiving antenna 126. N may be represented by a vector comprising noise, associated with the wireless communication medium, received at each of the receiving antennas 122, 124, ..., 126:

$$N = \begin{bmatrix} n_1 \\ n_2 \\ \vdots \\ n_n \end{bmatrix} \qquad \text{Equation [5e]}$$

where $n_1$ may correspond to noise received at receiving antenna 122, $n_2$ may correspond to noise received at receiving antenna 124, and $n_n$ may correspond to noise received at receiving antenna 126.

In various embodiments of the invention which utilize DFD methods, the base station 102 may enable Equation [5] to be utilized to compute estimated values for the vector X, where the estimate vector, $\hat{X}$, may be represented as illustrated in the following equation:

$$\hat{X} = \begin{bmatrix} \hat{x}_1 \\ \hat{x}_2 \\ \vdots \\ \hat{x}_M \end{bmatrix} \qquad \text{Equation [6]}$$

where $\hat{x}_1$ may correspond to an estimate of the transmitted signal $x_1$, $\hat{x}_2$ may correspond to an estimate of the transmitted signal $x_2$, and $\hat{x}_M$ may correspond to an estimate of the transmitted signal $x_M$.

To compute the estimate vector, the base station may enable computation of a feedforward matrix, F, and a feedback matrix, B. The matrices F, and B, may represent matched filters, which may be utilized to process the received signal vector Y, as illustrated in Equation [5a]. The matched filters, received signal vector, and estimate vector may be utilized to compute a decision criteria matrix, $\hat{Y}$, as illustrated in the following equation:

$$\hat{Y} = F^H \cdot Y - B^H \cdot \hat{X} \qquad \text{Equation [7]}$$

where $G^H$ may be a complex conjugate transpose, or Hermitian transpose, for the matrix G. The matrix F may be an nxn matrix comprising n rows and n columns, and the matrix B may be an MxM matrix. Based on a decision error, $e_{DFD}$, which may be defined as illustrated in the following equation:

$$e_{DFD} = X - \hat{Y} \qquad \text{Equation [8]}$$

where $\hat{X} = X$, for example. Under the condition, $\hat{X} = X$, the feedforward and feedback matrices may correspond to optimal, or matched, filters. The matrices, F and B, may be computed to achieve a minimum value for a covariance error associated with the decision error, $e_{DFD}$. At least a portion of values for matrix elements contained within the matrices, F and/or B, may be based on the computed channel estimate matrix H.

In various embodiments of the invention that utilize an MMSE method, the feedback matrix, B, may be a full rank matrix. In various embodiments of the invention that utilize an SIC method, the feedback matrix, B, may be an upper triangular matrix, or lower triangular matrix.

In various embodiments of the invention, an MMSE method may be utilized to define matched filters that may enable MAI suppression at the base station 102. Consequently, the matched filters may enable the base station 102 to selectively receive a signal from mobile terminal 134, while suppressing at least a portion of signals transmitted by mobile terminals 144, ..., 154. This may result in improved SNR, and receiver sensitivity, in multiuser environments.

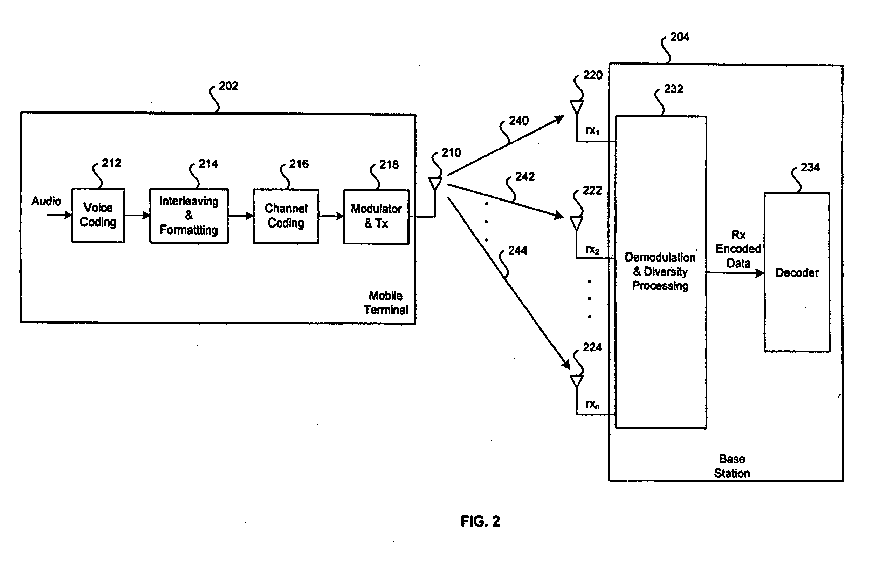

FIG. 2 is a block diagram illustrating exemplary functions performed by a mobile terminal and a base station in a system for an improved cellular interference cancelling diversity receiver, in accordance with an embodiment of the invention. Referring to FIG. 2, there is shown a mobile terminal 202, a transmitting antenna 210, a base station 204, a plurality of receiving antennas 220, 222, ..., 224, and a plurality of individual path signals 240, 242, ..., 244. The mobile terminal 202 may comprise a voice coding block 212, and interleaving and formatting block 214, a channel coding block 216, and a modulator and transmitter block 218. The base station 204 may comprise a demodulation and diversity processing block 232, and a decoder block 234.

The mobile terminal 202 may comprise suitable logic, circuitry and/or code that may enable reception of information from an information source, for example speech from a user of the mobile terminal 202, encode the received information, modulate the encoded information utilizing a carrier frequency, and transmit a signal comprising the modulated encoded information, via a transmitting antenna 210, to a wireless communication medium. In an exemplary embodiment of the invention, the transmitted signal may be generated according to one or more communication standards, for example the Global System for Mobile Communications (GSM) and/or its derivatives, the integrated digital enhanced network (iDEN) and/or its derivatives, the interim standard 95 (IS-95) and/or its derivatives, the interim standard 136 (IS-136) and/or its derivatives, and/or personal digital cellular (PDC) and/or its derivatives. In exemplary embodiments of the invention, the transmitted signal may utilize a time division multiple access (TDMA) air interface, and/or a code division multiple access (CDMA) air interface, and/or wideband CDMA (WCDMA) air interface.

The voice coding block 212 may comprise suitable logic, circuitry and/or code that may enable reception of audio information, for example speech, and generating a binary or other suitable representation of the received audio information. In an exemplary embodiment of the invention, the voice coding function 212 may perform adaptive multi-rate (AMR) coding according to technical specification (TS) 26.090 from the 3rd Generation Project (3GPP).

The interleaving and formatting block 214 may comprise suitable logic, circuitry and/or code that may enable generation of an information frame based on received binary data. When the information frame is generated, bits in the received binary data may be arranged and grouped in an order based upon a coding method utilized for generating the binary data. In an exemplary embodiment of the invention, the received binary data may be arranged and grouped according to TS 26.101 from the 3GPP. The interleaving and formatting block 214 may also rearrange the order of bits within the information frame. The rearranged bit order may be output as interleaved binary data.

The channel coding block 216 may comprise suitable logic, circuitry and/or code that may enable generation of one or more symbols based on received binary data. The symbols may be generated based on a modulation type and a corresponding constellation map. Based on the modulation type, bits in the received binary data may be grouped, so that each group of bits may be utilized to select a symbol from the corresponding constellation map. The plurality of bits contained in the received binary data may be utilized to generate a corresponding plurality of symbols, where the symbols may comprise a representation of the plurality of bits. The plurality of symbols may be utilized to generate a baseband signal.

The modulator and transmitter block 218 may comprise suitable logic, circuitry and/or code that may enable reception of a baseband signal and generation of a corresponding transmitted signal. The modulator and transmitter block 218 may enable generation of a carrier signal where the frequency of the carrier signal may be referred to as a carrier frequency. The carrier frequency may be selected according to relevant industry standards and/or regulations. The carrier frequency may be utilized to modulate the baseband signal to generate the transmitted signal.

The base station 204 may comprise suitable logic, circuitry and/or code that may enable reception of a plurality of individual path signals from a wireless communication medium and performing diversity processing and decoding on the received signals. The diversity processing may comprise demodulating each of the received individual path signals utilizing a demodulating frequency, and combining at least a portion of the demodulated signals to generate a combined signal. Decoding may comprise decoding the combined signal to generate decoded information.

The demodulation and diversity processing block 232 may comprise suitable logic, circuitry and/or code that may enable generation of a combined signal by combining signal energy from a plurality of individual path signals, as illustrated in Equation [3]. The demodulation and diversity processing block 232 may enable generation of a demodulating signal. The demodulating signal may be utilized to demodulate the each of the received individual path signals to generate a combined signal. The demodulated signals, and the combined signal may be baseband signals.

The demodulation and diversity processing block 232 may also comprise suitable logic, circuitry, and/or code that may enable MMSE processing of a plurality of individual path signals received from a corresponding plurality of mobile terminals 134, 144, ..., 154 (FIG. 1 B) in a multiuser environment. In this regard, the demodulation and diversity processing block 232 may enable MAI suppression among the signals received from the plurality of mobile terminals. The MMSE processing may enable generation of decoded bits based on the received plurality of individual path signals.

The decoder block 234 may comprise suitable logic, circuitry and/or code that may enable decoding of the combined signal by performing burst processing and/or frame processing. The decoder block 234 may enable generation of decoded information.

In operation, the mobile terminal 202 may receive audio information as input. The voice coding block 212 may generate output data based on AMR coding of the audio input. The interleaving and formatting block 214 may generate a formatted information frame based on output received from the voice coding block 212. The interleaving and formatting block 214 may generate interleaved output data by interleaving bits in the formatted information frame. The channel coding block 216 may receive interleaved output data from the interleaving and formatting block 214 and generate a baseband signal comprising a plurality of symbols generated based on the received interleaved output data, and on a modulation type. The modulator and transmitter block 218 may generate a transmitted signal based on the baseband signal and utilizing a selected carrier frequency. The transmitted signal may be transmitted to the wireless communication medium via the transmitting antenna 210. The transmitted signal may comprise a plurality of individual path signals 240, 242, ..., 244.

The base station 204 may receive at least a portion of the plurality of individual path signals 240, 242, ..., 244 via a plurality of receiving antennas 220, 222, ..., 224. The receiving antenna 220 may be utilized to receive individual path signal 240. The receiving antenna 222 may be utilized to receive individual path signal 242. The receiving antenna 224 may be utilized to receive individual path signal 244. The demodulation and diversity processing block 232 may demodulate each of the individual path signals received via receiving antennas 220, 222, ..., 224 to generate corresponding demodulated signals. The received individual path signals may be demodulated based on a demodulating signal, where the frequency of the demodulating signal may be about equal to the selected carrier signal utilized at the mobile terminal 202, and associated with one or more individual path signals received via the wireless communication medium. The demodulation and diversity processing block 232 may also combine signal energy from the demodulated signals to generate a combined signal. The demodulation and diversity processing block 232 may output a baseband signal. The decoder 234 may perform burst processing and/or frame processing on the combined signal to generate decoded information.

In an exemplary embodiment of the invention, at least a portion of the decoded information may be utilized for establishing constraints, which may be utilized by the decoder block 234 for decoding the combined signal in connection with the burst process and/or frame process. When AMR coding is utilized, the constraints may be based on received and/or expected AMR parameters contained in at least a portion of the decoded information, for example line spectral pair (LSP) sets, pitch delay, and/or pitch gain. In this regard, the information content of at least a portion of the decoded information may be utilized for generating decoded information from the combined signal.

In various embodiments of the invention, burst processing and/or frame processing may further enable the base station to correct bit errors in a received signal to reduce BER and/or PER in received signals beyond the capabilities of some conventional decoding methods, for example Viterbi decoding. The effect of the BER and/or PER improvement may be equivalent to an increase in an SNR associated with a received signal and/or a combined signal beyond the SNR measures as illustrated in Equations [2] and/or [4].

Burst processing may comprise decoding groups of encoded bits contained within a frame by applying a forward error correction (FEC) technique. The encoded bits may be generated at a transmitter based on an inner code, for example a binary convolutional code (BCC). Burst processing may comprise decoding the encoded bits based on a technique such as Viterbi decoding. Burst processing may detect and/or correct bit errors within a group of encoded bits in a received frame based on examination of the group of encoded bits. Frame processing may comprise verifying and/or correcting bit errors that may have occurred during burst processing. Frame processing may utilize an outer code, in which an entire frame is examined to detect and/or correct bit errors within the frame. Frame processing may utilize a cyclical redundancy check (CRC) method, for example.

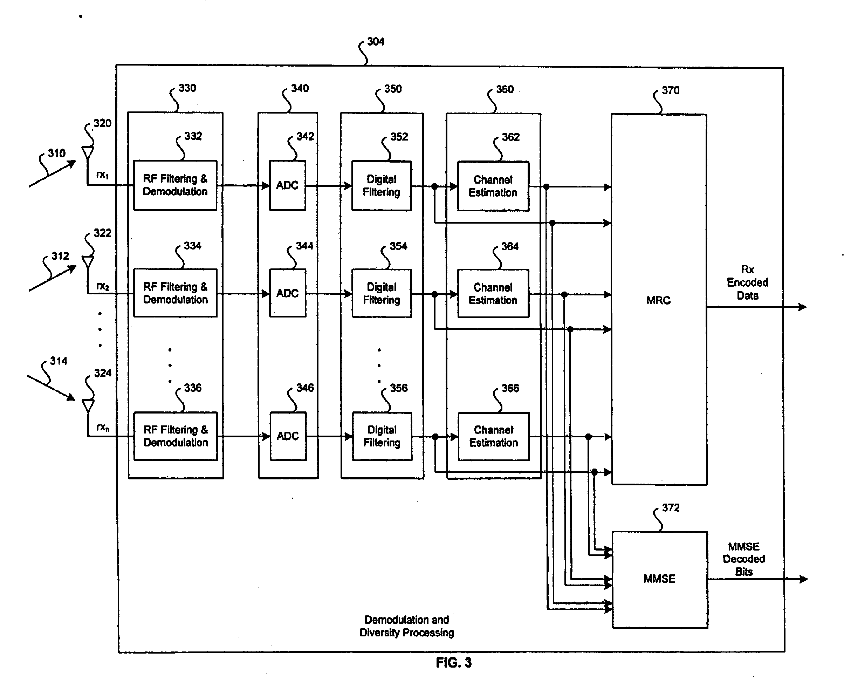

FIG. 3 is a block diagram illustrating exemplary demodulation and diversity processing functions performed by a base station in a system for an improved cellular interference cancelling diversity receiver, in accordance with an embodiment of the invention. Referring to FIG. 3, there is shown a demodulation and diversity processing block 304, a plurality of receiving antennas 320, 322, ..., 324, and a plurality of individual path signals 310, 312, ..., 314. The demodulation and diversity processing block 304 may comprise a radio frequency (RF) filtering and demodulation block 330, an analog to digital conversion (ADC) block 340, a digital filtering block 350, a channel estimation block 360, a maximal ratio combining (MRC) block 370, and a minimum mean squared error (MMSE) block 372. The demodulation and diversity processing block 304 may comprise suitable logic, circuitry, and/or code that may be substantially similar to the demodulation and diversity processing block 232 (FIG. 2).

The RF filtering and demodulation block 330 may comprise a plurality of RF filtering and demodulation modules 332, 334, ..., 336. The ADC block 340 may comprise a plurality of ADC modules 342, 344, ..., 346. The digital filtering block 350 may comprise a plurality of digital filtering modules 352, 354, ..., 356. The channel estimation block 360 may comprise a plurality of channel estimation modules 362, 364, ..., 366.

The demodulation and diversity processing block 304 may comprise suitable logic, circuitry and/or code that may enable receiving of a plurality of individual path signals from a wireless communication medium and performing diversity processing on the received signals. The diversity processing may demodulate each of the received individual path signals to generate a corresponding plurality of demodulated signals. Each of the demodulated signals may be converted from an analog representation to a digital representation. Each of the digital signals, comprising the corresponding digital representation, may be processed by a digital filter to generate a filtered digital signal. Each filtered digital signal, associated with a corresponding x'[j] received individual path signal, may comprise information that may be utilized for computing a channel estimate, h[j], which may be utilized to characterize an uplink path. A combined signal may be generated based on the plurality of digital signals and corresponding channel estimates.

The RF filtering and demodulation block 330 may comprise suitable logic, circuitry and/or code that may enable demodulation of a plurality of received individual path signals to generate a corresponding plurality of demodulated signals. Each of the demodulated signals may be RF filtered by an RF filtering stage to select a corresponding baseband signal from the demodulated signal. The RF filtering stage may comprise a low pass filter. The RF filtering and demodulation block 330 may output a plurality of baseband signals corresponding to the plurality of received individual path signals.

Each of the RF filtering and demodulation modulation modules 332, 334, ..., 336 may comprise suitable logic, circuitry and/or code that may be substantially similar to the RF filtering and demodulation block 330. Each of the RF filtering and demodulation modules 332, 334, ..., 336 may receive a single individual path signal and output a single baseband signal.

The ADC block 340 may comprise suitable logic, circuitry and/or code that may enable conversion of a plurality of baseband signals comprising analog signal representations to a corresponding plurality of digital signal representations. Each of the digital signal representations may comprise a plurality of symbols.

Each of the ADC modules 342, 344, ..., 346 may comprise suitable logic, circuitry and/or code that may be substantially similar to the ADC block 340. Each of the ADC modules 342, 344, ..., 346 may receive a single baseband signal comprising an analog signal representation and output a single digital signal representation.

The digital filtering block 350 may comprise suitable logic, circuitry and/or code that may enable digital filtering of a plurality of digital signal representations. Digital filtering may be utilized to enable removal of undesirable artifacts in digital signals, which may result from analog to digital conversion, for example. The digital filtering block 350 may output a plurality of filtered digital signals corresponding to the received plurality of digital signal representations.

Each of the digital filtering modules 352, 354, ..., 356 may comprise suitable logic, circuitry and/or code that may be substantially similar to the digital filtering block 350. Each of the digital filtering modules 352, 354, ..., 356 may receive a single digital signal representation and output a single filtered digital signal.

The channel estimation block 360 may comprise suitable logic, circuitry and/or code that may enable computation of channel estimates corresponding to a received plurality of filtered digital signals. The channel estimates may be utilized to characterize a plurality of uplink paths corresponding to a received plurality of individual path signals. Each of the channel estimates may be utilized at a base station 204 for computing estimated values for the individual path signals transmitted by a mobile terminal 202. The estimated values may be utilized for detecting information contained in the received plurality of individual path signals during the decoding process. The channel estimation block 360 may output a plurality of channel estimates, h[j], corresponding to the received plurality of filtered digital signals, where each of the filtered signals may generated based on a corresponding received plurality of individual path signals, x'[j].

Each of the channel estimation modules 362, 364, ..., 366 may comprise suitable logic, circuitry and/or code that may be substantially similar to the channel estimation block 360. Each of the channel estimation modules 362, 364, ..., 366 may receive a single filtered digital signal and output a corresponding channel estimate.

The MRC block 370 may comprise suitable logic, circuitry and/or code that may enable combining of signal energy associated with each of a plurality of filtered digital signals to generate a combined signal.

The MMSE block 372 may comprise suitable logic, circuitry, and/or code that may enable MMSE processing of a plurality of filtered digital signals. The MMSE block 372 may enable generation of decoded bits based on a plurality of computed channel estimates.

In operation, the demodulation and diversity processing block 304 may receive at least a portion of the plurality of individual path signals 310, 312, ..., 314 via a plurality of receiving antennas 320, 322, ..., 324. In a multiuser environment, the plurality of individual path signals 310, 312, ..., 314 may be based on signals received from a plurality of mobile terminals 134, 144, ..., 154. The receiving antenna 320 may be utilized to receive individual path signal 310. The receiving antenna 322 may be utilized to receive individual path signal 312. The receiving antenna 324 may be utilized to receive individual path signal 314.

The RF filtering and demodulation module 332 may enable RF filtering and demodulation functions on the received individual path signal 310. The RF filtering and demodulation module 332 may output a demodulated signal based on the received individual path signal 310. The RF filtering and demodulation module 334 may enable RF filtering and demodulation of the received individual path signal 312. The RF filtering and demodulation module 334 may output a demodulated signal based on the received individual path signal 312. The RF filtering and demodulation module 336 may enable RF filtering and demodulation functions on the received individual path signal 314. The RF filtering and demodulation module 336 may output a demodulated signal based on the received individual path signal 314.

The ADC module 342 may enable analog to digital conversion of the demodulated signal received from the RF filtering and demodulation module 332. The ADC module 342 may output a digital signal comprising a plurality of symbols based on the demodulated signal received from the RF filtering and demodulation module 332. The ADC module 344 may enable analog to digital conversion of the demodulated signal received from the RF filtering and demodulation module 334. The ADC module 344 may output a digital signal comprising a plurality of symbols based on the demodulated signal received from the RF filtering and demodulation module 334. The ADC module 346 may enable analog to digital conversion of the demodulated signal received from the RF filtering and demodulation module 336. The ADC module 346 may output a digital signal comprising a plurality of symbols based on the demodulated signal received from the RF filtering and demodulation module 336.

The digital filtering module 352 may enable digital filtering of the digital signal received from the ADC module 342. The digital filtering module 352 may output a filtered digital signal based on the digital signal received from the ADC module 342. The digital filtering module 354 may enable digital filtering of the digital signal received from the ADC module 344. The digital filtering module 354 may output a filtered digital signal based on the digital signal received from the ADC module 344. The digital filtering module 356 may be utilized to perform digital filtering functions on the digital signal received from the ADC module 346. The digital filtering module 356 may output a filtered digital signal based on the digital signal received from the ADC module 346.

The channel estimation module 362 may compute channel estimates based on the filtered digital signal received from the digital filtering module 352. The channel estimation module 362 may output computed channel estimates based on the filtered digital signal received from the digital filtering module 352. The channel estimation module 364 may be utilized to compute channel estimates based on the filtered digital signal received from the digital filtering module 354. The channel estimation module 364 may output computed channel estimates based on the filtered digital signal received from the digital filtering module 354. The channel estimation module 366 may be utilized to compute channel estimates based on the filtered digital signal received from the digital filtering module 356. The channel estimation module 366 may output computed channel estimates based on the filtered digital signal received from the digital filtering module 356.

The MRC block 370 may enable generation of a combined signal by combining signal energy associated a plurality of filtered digital signals from the digital filtering block 350, based on a corresponding plurality of channel estimates computed by the channel estimation block 350. The plurality of filtered digital signals received from the digital filtering block 350 may correspond to a received plurality of individual path signals $x'[j]$ received at the RF filtering and demodulation block 330. The MRC block 270 may generate the combined signal by utilizing the plurality of filtered digital signals, the corresponding plurality of channel estimates $h[j]$, computed by the channel estimation block 360, corresponding to each of the filtered digital signals, and a corresponding plurality of computed weighting factors $w_j$. The MRC block 370 may enable computation of the plurality of weighting factors $w_j$. The functionality performed within the MRC block 370 for generating a combined signal based on a plurality of received individual path signals may be as illustrated in Equation [3]. The MRC block 370 may output received (RX) encoded data.

The MMSE block 372 may enable MMSE processing of a plurality of individual path signals received from a corresponding plurality of mobile terminals 134, 144, ..., 154 (FIG. 1B) in a multiuser environment. The MMSE block 372 may process the plurality of filtered digital signals received from the digital filtering block 350. The plurality of filtered digital signals may correspond to a plurality of received individual path signals received from each of a plurality of mobile terminals 134, 144, ..., 154. In addition, the MMSE block 372 may utilize the plurality of channel estimates H computed by the channel estimation block 360 in a multiuser environment. The MMSE block 372 may enable computation of feedback and feedforward matrices, which correspond to matched filters that may be utilized to enable MAI suppression among the signals received from the plurality of mobile terminals. The MMSE block 372 may enable generation of decoded bits based on the received plurality of individual path signals.

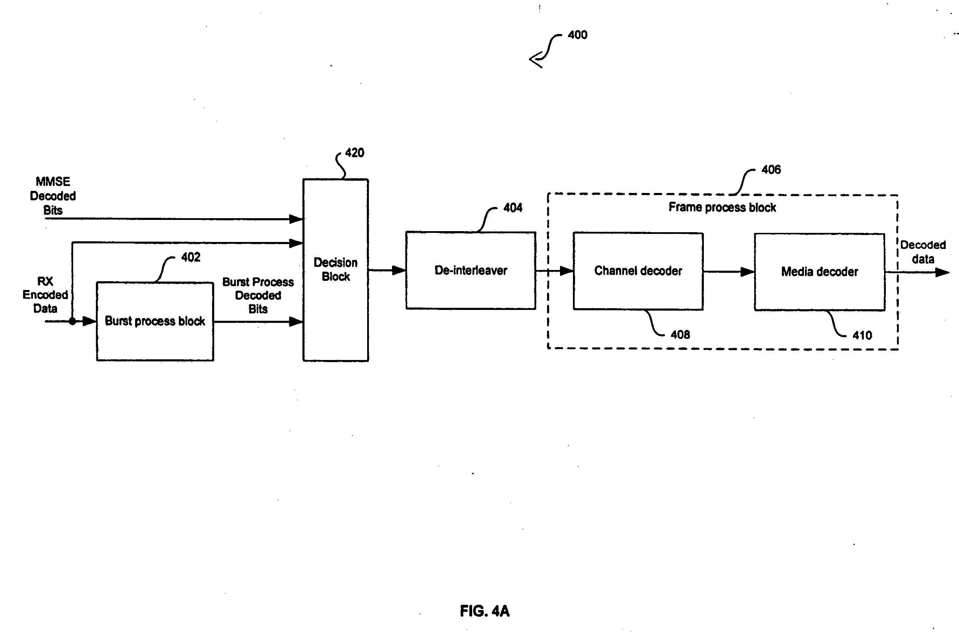

FIG. 4A is a block diagram illustrating a multilayer system for improving decoding, in accordance with an embodiment of the invention. Referring to FIG. 4A, there is shown a decoder 400 that comprises a burst process block 402, a decision block 420, a de-interleaver 404, and a frame process block 406. The decoder 400 may comprise the functionality of the decoder 234 (FIG. 2). The frame process block 406 may comprise a channel decoder 408 and a media decoder 410. The decoder 400 may comprise suitable logic, circuitry, and/or code that may be adapted to operate in a wired or wireless receiver. The decoder 400 may be adapted to utilize redundancy to decode RX encoded data, for example, signals that comprise convolutional encoded data. The decoder 400 may also be adapted to utilize a multilayer approach for improving the decoding of RX encoded data or signals with memory. In this regard, the decoder 400 may be adapted to perform a burst process and a frame process when processing the RX encoded data. The multilayer approach performed by the decoder 400 may be compatible with a plurality of modulation standards.

The burst process block 402 may comprise suitable logic, circuitry, and/or code that may be adapted to perform the burst process portion of the decoding operation of the decoder 400. The burst process block 402 may comprise, for example, a channel estimation operation and a channel equalization operation. Results from the channel estimation operation may be utilized by the channel equalization operation to generate a plurality of data bursts based on a maximum-likelihood sequence estimation (MLSE) operation. The data bursts may comprise burst process decoded bits. The output of the burst process block 402 may be transferred to the decision block 420.

The decision block 420 may comprise suitable logic, circuitry and/or code that may enable selection of MMSE decoded bits, or burst process decoded bits. The MMSE decoded bits may be received from the MMSE block 372 (FIG. 3). Upon reception of the burst process decoded bits, the decision block 420 may evaluate the burst process cyclical redundancy code (burst CRC) contained in the burst process decoded bits. The burst CRC may be compared to a CRC calculated at the decoder 400 based on at least a portion of the burst process decoded bits. If the burst CRC is equal to the calculated CRC, the calculated CRC may be determined to be valid. If the burst CRC is determined to be valid, the decision block may accept the frame comprising the burst process decoded bits. In this regard, the burst processed frame may be transferred to the de-interleaver 404.

Upon reception of the MMSE decoded bits, the decision block 420 may evaluate the MMSE CRC contained in the MMSE decoded bits. The MMSE CRC may be compared to a CRC calculated at the decoder 400 based on at least a portion of the MMSE decoded bits. If the MMSE CRC is equal to the calculated CRC, the calculated CRC may be determined to be valid. If the MMSE CRC is determined to be valid, the decision block 420 may accept the frame comprising the MMSE decoded bits. In this regard, the MMSE frame may be transferred to the de-interleaver 404.

The de-interleaver 404 may comprise suitable logic, circuitry, and/or code that may be adapted to multiplex bits from a plurality of data bursts received from the decision block 420 to form the frame inputs to the frame process block 406. Interleaving may be utilized to reduce the effect of channel fading distortion, for example.

The channel decoder 408 may comprise suitable logic, circuitry, and/or code that may be adapted to decode the bit sequences in the input frames received from the de-interleaver 404. The channel decoder 408 may be adapted to utilize the Viterbi algorithm during a Viterbi operation to improve the decoding of the input frames. The media decoder 410 may comprise suitable logic, circuitry, and/or code that may be adapted to perform content specific processing operations on the results of the channel decoder 408 for specified applications such as MPEG-4, enhanced full-rate (EFR) or adaptive multi-rate (AMR) speech coder used in global system for mobile (GSM) communications, and/or MP3, for example.

Some conventional base stations may perform computations for the channel decoding process but may not perform analysis of the contents of the decoded bits. In various embodiments of the invention, the media decoder 410 may enable a base station to perform analysis on the contents of the decoded bits. The analysis may comprise performing analysis of parameters related to the decoded bits. For example, the media decoder 410 may enable analysis of speech parameters in decoded bits without requiring speech synthesis. After performing the analysis on the decoded bits, the media decoder 410 may output the decoded bits.

Regarding the frame process operation of the decoder 400, a standard approach for decoding convolution encoded data is to find the maximum-likelihood sequence estimate (MLSE) for a bit sequence. This may involve searching for a sequence X in which the conditional probability P(X/R) is a maximum, where X is the transmitted sequence and R is the received sequence, by using, for example, the Viterbi algorithm. In some instances, the received signal R may comprise an inherent redundancy as a result of the encoding process by the signals source. This inherent redundancy may be utilized in the decoding process by developing a MLSE algorithm that may be adapted to meet at least some of the physical constrains of the signals source. The use of physical constraints in the MLSE may be expressed as finding a maximum of the conditional probability P(X/R), where the sequence X meets a set of physical constrains C(X) and the set of physical constrains C(x) may depend on the source type and on the application. In this regard, the source type may be a voice, music and/or a video source type.

For example, for speech applications, physical constraints may include gain continuity and smoothness in inter-frames or intra-frames, pitch continuity in voice inter-frames or intra-frames, and/or consistency of line spectral frequency (LSF) parameters that are utilized to represent a spectral envelope.

Various embodiments of the invention may be utilized when the decoding process comprises burst processing and/or frame processing. For example, when the base station 204 receives individual path signals via a WCDMA air interface, the decoder 400 may bypass the burst processing block 402 when decoding RX encoded data. In this case, the decision block 420 may select the MMSE decoded bits input, which may be generated by the MMSE block 372, or the RX encoded data input, which may be generated by the MRC block 370. The decision block 420 may communicate an output to the de-interleaver block 404, which may communicate an output to the frame process block 406. When the base station 204 receives individual path signals via a GSM or TDMA air interface, for example, the decision block 420 may select the burst process decoded bits input, which may be generated by the burst process block 402, or the MMSE decoded bits input, which may be generated by the MMSE block 372.

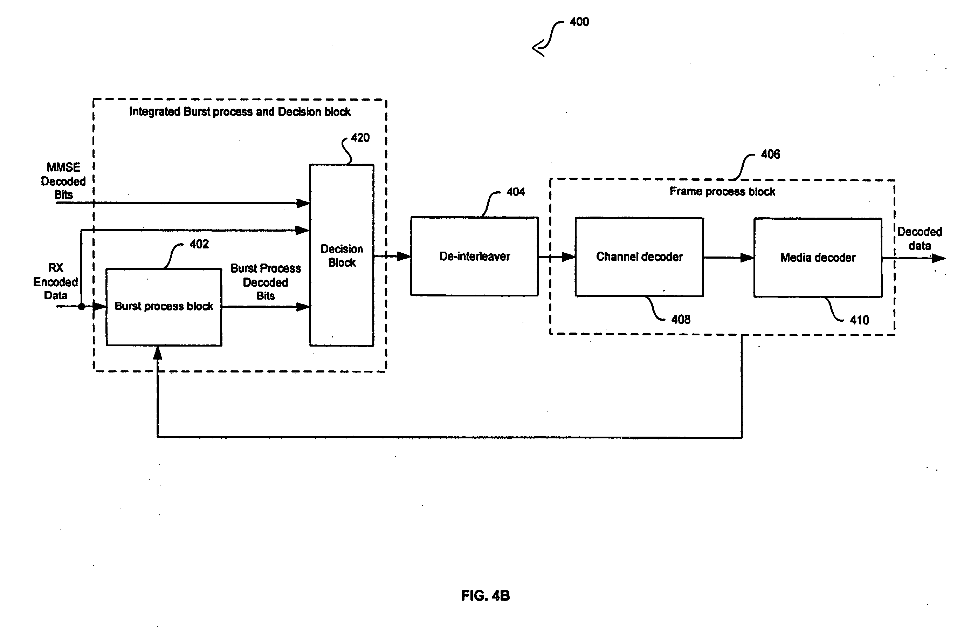

FIG. 4B is a block diagram illustrating an iterative multilayer approach for improving decoding, in accordance with an embodiment of the invention. Referring to FIG. 4B, there is shown the decoder 400 in FIG. 4A with a feedback signal from the frame process portion of the multilayer decoding approach to the burst process portion of the multilayer decoding approach. The frame process may comprise the use of redundancy verification of the results generated by the Viterbi algorithm and the use of physical constraints to reduce decoding errors that may result from the standard Viterbi algorithm. The burst process may utilize information decoded in the frame process as an input to improve the channel estimation and channel equalization operations. In an alternative embodiment of the invention, the burst process block 402 and the decision block 420 may be integrated to form an integrated burst process and decision block as illustrated in FIG. 4B.

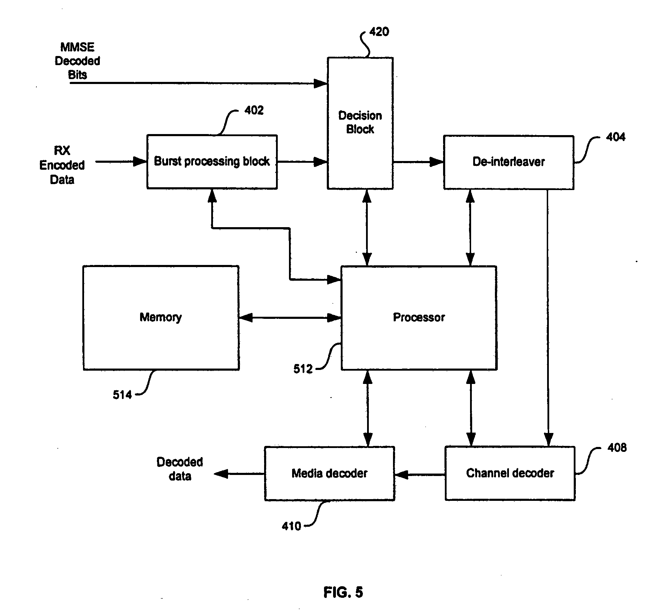

FIG. 5 is a block diagram illustrating a multilayer system with a processor and memory for improving decoding, in accordance with an embodiment of the invention. Referring to FIG. 5, there is shown a processor 512, a memory 514, the burst process block 402, the decision block 420, a de-interleaver 404, the channel decoder 408 and the media decoder 410. The processor 512 may comprise suitable logic, circuitry, and/or code that may be adapted to perform computations and/or management operations. The processor 512 may also be adapted to communicate and/or control at least a portion of the operations of the burst process block 402, the decision block 420, the de-interleaver 404, the channel decoder 408 and the media decoder 410. The memory 514 may comprise suitable logic, circuitry, and/or code that may be adapted to store data and/or control information. The memory 514 may be adapted to store information that may be utilized and/or that may be generated by the burst process block 402, the decision block 420, the de-interleaver 404, the channel decoder 408 and the media decoder 410. In this regard, information may be transferred to and from the memory 514 via the processor 512, for example.

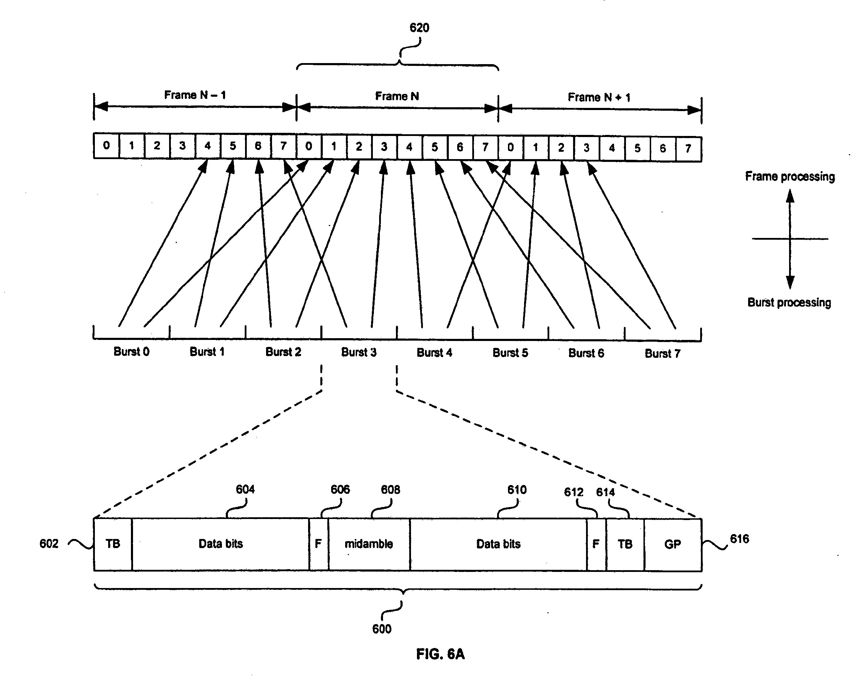

FIG. 6A is a diagram illustrating exemplary combined frame and burst processes in GSM applications, in accordance with an embodiment of the invention. Referring to FIG. 6A, there is shown a series of at least one time slot burst 600 and a series of at least one frame 620. The series of at least one time slot burst 600, as shown, may correspond to Burst 0 through Burst 7, while the series of at least one frame 620, as shown, may correspond to Frame N-1 through Frame N+1. The series of at least one time slot burst 600 may be generated during the burst processing of the decoder 400 in FIG. 4A, while the series of at least one frame 620 may be generated during the frame processing of the decoder 400. The time slot burst 600 may comprise a tail bit (TB) 602, first data bits 604, a flag bit (F) 606, a midamble 608, second data bits 610, a flag bit (F) 612, a tail bit (TB) 614, and guard bits (GP) 616. The TB 602 and the TB 614 may comprise 3 bits each. The first data bits 604 and the second data bits 610 may comprise 57 bits each. The F 606 and the F 612 flag bits may comprise 1 bit each. The midamble 608 may comprise 26 bits and may be utilized as a training sequence for channel equalization, for example. The frame 620 may comprise eight partitions or sequences of bits.

As shown, the first data bits 604 in the Burst 0 through Burst 3 may be transferred to the fifth, sixth, seventh, and eight sequences of the Frame N-1 respectively, for example. The first data bits 604 in the Burst 4 through Burst 7 may be transferred to the fifth, sixth, seventh, and eight sequences of the Frame N respectively, for example. The second data bits 610 in the Burst 0 through Burst 3 may be transferred to the first, second, third, and fourth sequences of the Frame N respectively, for example. The second data bits 610 in the Burst 4 through Burst 7 may be transferred to the first, second, third, and fourth sequences of the Frame N+1 respectively, for example. The decoding of bit sequences transferred from the time slot bursts in the burst processing to the frames in the frame processing may be performed by utilizing the Viterbi algorithm to reduce the number of sequences utilized during the decoding search. In this regard, utilizing signal redundancy and at least one physical constraint may result in a more accurate decoding operation.

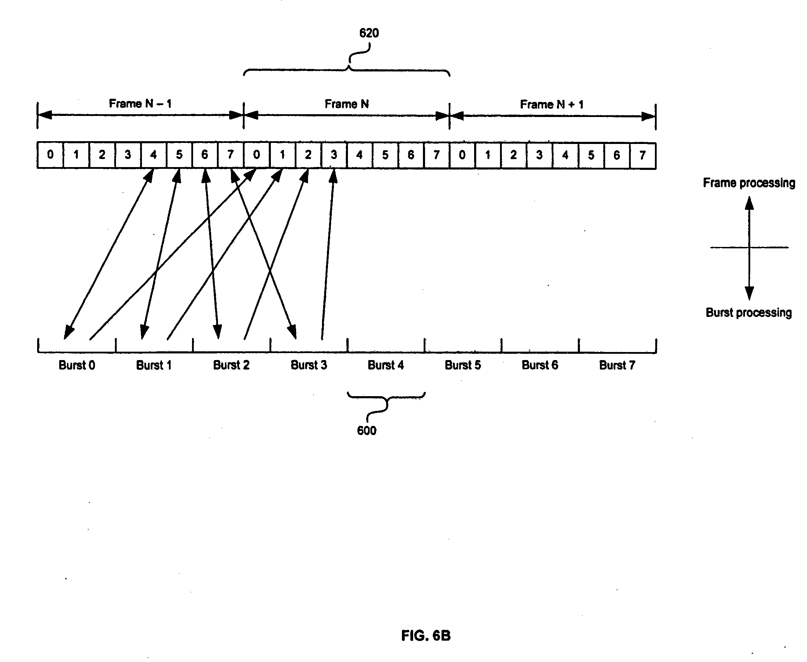

FIG. 6B is a diagram illustrating exemplary iterative frame and burst processes in GSM applications, in accordance with an embodiment of the invention. Referring to FIG. 6B, there is shown a series of at least one time slot burst 600 and a series of at least one frame 620 as illustrated in FIG. 6A. The series of at least one time slot burst 600 may correspond to Burst 0 through Burst 7, while the series of at lest one frame 620 may correspond to Frame N-1 through Frame N+1.

There may be two types of iterative processes to consider: a causal iterative process and a non-causal iterative process. For the causal iterative process, Burst 0 through Burst 3 may each have 57 data bits from the first data bits 604 portion of the time slot burst 600 that have been decoded during the frame processing of Frame N-1. Utilizing the decoded 57 data bits in each of Burst 0 through Burst 3 and the 26 bits in the midamble 608, the burst process may be recalculated or a second iteration of the burst process may occur. In this regard, the channel estimation operation of the burst process may be improved by utilizing the decoded data bits generated by the frame process during a second iteration. Moreover, the MLSE in the channel equalization operation of the burst process may consider that the decoded data bits are known with a higher probability than during the first iteration. In some instances, to reduce the complexity that may be introduced by a second iteration operation, the burst process may be adapted to perform a second iteration on selected time slot bursts determined during the first iteration. In this regard, a particular time slot burst may be selected for a second iteration when it is associated with having a low carrier-to-interference (C/I) value, for example. Once the burst process improves the data, it may be further interleaved and processed by the frame process. The frame process my use a standard frame process or determine the best sequence based on, for example, the redundancy

For the non-causal iterative process, bits from Burst 0 through Burst 7 may be needed to recalculate the burst process for bit sequences that may be transferred to Frame N. Data from Frame N-1 and/or data from Frame N+1 may be utilized to calculate the burst process for bit sequences that may be transferred to Frame N. Utilizing the decoded 114 data bits in each of Burst 0 through Burst 7 and the 26 bits in the midamble 608, the burst process may be recalculated. As with the causal iterative process, a particular time slot burst may be selected for a second iteration when it is associated with having a low carrier-to-interference (C/I) value, for example.

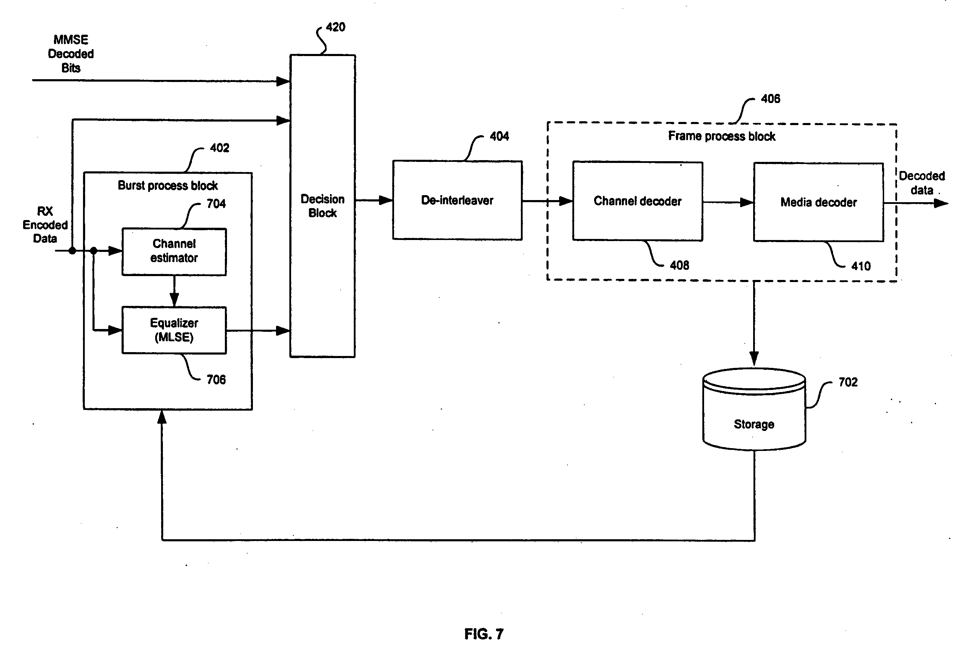

FIG. 7 is a block diagram illustrating an exemplary non-causal iterative system, in accordance with an embodiment of the invention. Referring to FIG. 7, there is shown the burst process block 402, the decision block 420, the deinterleaver 404, the frame process block 406, the channel decoder 408, the media decoder 410, and storage 702. The burst process block 402 is shown to comprise a channel estimator 704 and an equalizer 706. The storage 702 may comprise suitable logic, circuitry, and/or code that may be adapted to store data associated with the frame process of a previously processed frame. The channel estimator 704 may comprise suitable logic, circuitry, and/or code that may be adapted to perform channel estimation operations during the burst process. The equalizer 706 may comprise suitable logic, circuitry, and/or code that may be adapted to perform MLSE channel equalization operations during the burst process.

In operation, data stored in the storage 702 that resulted from a frame process operation may be transferred to the channel estimator 704 and/or the equalizer 706 for a second iteration of the burst process for the Frame N. In this regard, the data stored in the storage 702 may comprise information regarding the time slot bursts in the burst process that may be utilized during the second iteration of the burst process for the Frame N.

When using the 57 data bits and the 26 midamble bits in the causal iterative process or when using 114 data bits and the 26 midamble data bits in the non-causal iterative process, hard decision values or soft decision values for the data bits may be utilized during the second iteration of the burst process. In some instances, soft decision values may be preferred for a particular application.

The channel estimator 704 in FIG. 7 may be adapted to perform a soft decision for the burst process. For example, for Gaussian minimum shift keying (GMSK) modulation, the estimated channel may be given by the expression:

$$\hat{W}(m)=\frac{1}{Gain}\cdot\sum_{n=0}^{N} j^{n}\cdot x_{n}\cdot S(m+n)$$

where $\hat{A}_n = j^n \cdot \overline{A}_n$ and $\overline{A}_n = \pm 1$, and the soft reference is given by $x_n = \alpha_n \cdot \overline{A}_n$, where $\alpha_n$ is a weight of the soft decision, and m = 0, 1, 2, ... 7. In this regard, the gain for the estimated channel may be given by the expression:

$$Gain=\sum_{n=0}^{N}\frac{|x_n|}{\left(1-2\cdot P_{ER}^{n}\right)}$$

where N = 147, and

$$x_n = \begin{cases} \pm 1 & If\,(Bit \in Midamble) \\ 0.3625 \cdot SD_n / 15 & If\,(Bit \in \Pr ev - Iteration) \end{cases}$$

where $SD_n$ refers to a soft decision value. The gain for the estimated channel may be simplified to the expression:

$$Gain = \sum_{n=0}^{N} \frac{|x_n|}{(1 - 2 \cdot P_{ER}^n)} \approx 0.825 \cdot \sum_{n=0}^{147} |x_n|$$

The offset and the estimation may be determined by the expression

$$E(Offset) = \sum_{k=0}^{4} \left| \hat{W}(k + Offset) \right|^2$$

In instances when the equalizer 706 in FIG. 7 is not adapted to handle the results from a previous iteration, a gradient search approach may be utilized for the second iteration in the burst process. In this regard, the first iteration may be performed in hardware and at least a portion of the second iteration may be performed in software, for example.

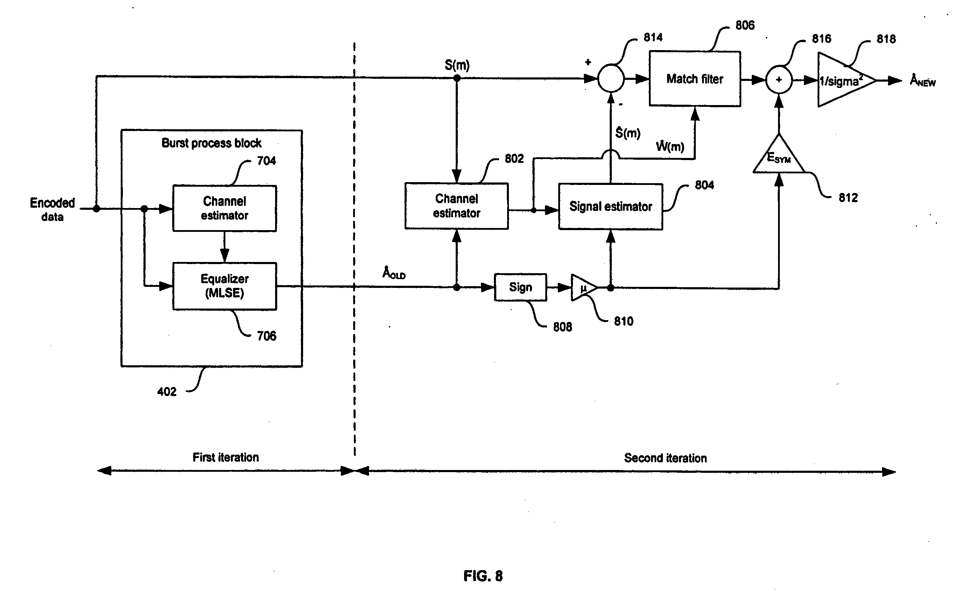

FIG. 8 is a block diagram illustrating an exemplary implementation of a second burst process iteration based on a gradient search approach, in accordance with an embodiment of the invention. Referring to FIG. 8, the gradient search in the second iteration of the burst process may be implemented utilizing suitable logic, circuitry, and/or code and may comprise a channel estimator 802, a signal estimator 804, a match filter 806, a sign converter 808, a converger 810, an energy estimator 812, a first adder 814, a second adder 816, and a gain stage 818.

The gradient search approach is based on finding the minimal distance H between a received and an estimated signal. The minimal distance H may be given by the expression:

$$H = \int \left(S(t) - \hat{S}(t)\right)^2 dt$$

where

$$\hat{S}(t) = \sum_{k=0}^{K} \hat{A}_k \cdot \hat{W}(t - k \cdot T_{SYM})$$

$\hat{A}_k$ is the $k^{th}$ element of the estimated symbols vector, and $\hat{W}(t)$ is the estimated symbol waveform. The gradient may be given by the expression:

$$G = \frac{\partial H}{\partial \hat{A}}$$

and

$$G_k(\hat{A}) = \int\left(conj\left(\hat{W}(t - k \cdot T_{SYM})\right) \cdot \left(S(t) - \sum_{m=-\infty}^{+\infty} \hat{A}_m \cdot \hat{W}(t - m \cdot T_{SYM})\right)\right) \cdot dt$$

where $G_k$ is the k$^{th}$ element of gradient vector.

The signal estimator 1104 may comprise suitable logic, circuitry, and/or code that may be adapted to perform a signal estimation operation based on the following expression:

$$I(t) = SignalEstimation(\hat{A}) = \sum_{k=-\infty}^{+\infty} \hat{A}_k \cdot \hat{W}(t - k \cdot T_{SYM})$$

**41**

The match filter 1106 may comprise suitable logic, circuitry, and/or code that may be adapted to perform a match filtering operation based on the following expression:

$$G_k = MatchFilter(S(t) - I(t)) = \int\left(conj\left(\hat{W}(t - k \cdot T_{SYM})\right) \cdot (S(t) - I(t))\right) \cdot dt$$

The gradient expression may be written as:

$$G_k(\hat{A}) = MatchFilter\left(S(t) - SignalEstimation(\hat{A})\right)$$

Using the gradient expression, the value of $\hat{A}$ may be estimated by the following iteration equation:

$$\hat{A}_{NEW} = \mu \cdot E_{SYM} \cdot \hat{A}_{OLD} + G_k(\mu \cdot \hat{A}_{old})$$

where $\mu$ is a convergence coefficient that may be provided by the converger 810 and that may be given by the expression

$$\mu = \frac{1}{IterNum}$$

where *IterNum* may correspond to the number of iterations, and

$$E_{SYM} = \int\left|\hat{W}(t)\right|^2 \cdot dt$$

may correspond to the energy of the estimated channel $\hat{W}(t)$ provided by the energy estimator 812. The gain stage 818 may comprise suitable logic, circuitry, and/or code that may be adapted to generate a normalization of the output soft decision generated by the second adder 816 to additive noise power (sigma$^2$). In some instances, the noise power may equal to the mean square error of estimation:

$$E_{NOISE} = sigma^2 = \frac{1}{T_{BURST}} \cdot \int_{T_{BURST}} \left(S(t) - \hat{S}(t)\right)^2 dt$$

The approach described herein may result in fewer decoding bit errors than may occur by a single iteration of the standard Viterbi algorithm: The use of an iterative multilayer process that utilizes redundancy and physical constraints may be efficiently implemented in the design of optimized receivers for decoding convolutional encoded data.

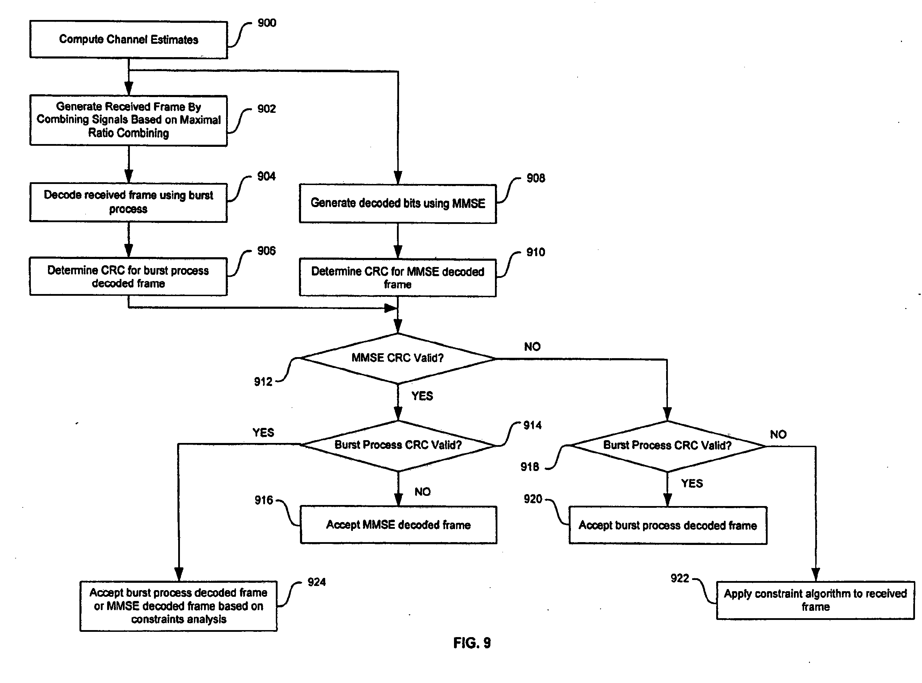

FIG. 9 is a flow diagram illustrating exemplary steps in the application of redundancy to a multilayer process, in accordance with an embodiment of the invention. Referring to FIG. 9, in step 900 channel estimates may be computed by a channel estimation block 360 (FIG. 3). In step 902, a receive frame may be generated by combining at least a portion of a plurality of individual path signals received at the demodulation and diversity processing block 232 (FIG. 2). The receive frame may comprise received (RX) encoded data. In step 904, the decoder 400 (FIG. 4A) may decode a received frame in the burst process block 402 by utilizing the Viterbi algorithm, for example. In step 906, a redundancy verification parameter, such as the CRC, may be determined for the burst process decoded frame. In step 908, the MMSE block 372 (FIG. 3) may generate decoded bits using MMSE. The decoded bits may be generated based on a plurality of received individual path signals from a plurality of mobile terminals in a multiuser environment. In step 910, a redundancy verification parameter, such as the CRC, may be determined for the MMSE decoded frame.

In step 912, the decoder 400 may determine whether the CRC for the MMSE decoded frame is valid. When the CRC for the MMSE decoded frame is valid, in step 914, the decoder 400 may determine whether the CRC for the burst process decoded frame is valid. When the CRC for the burst process decoded frame is not valid, the decoder 400 may proceed to step 916 where the MMSE decoded frame is accepted.

Returning to step 914, when the CRC for the burst process decoded frame is valid, the decoder 400 may proceed to step 924. In step 924, the decoded 400 may accept the burst process decoded frame, or the MMSE decoded frame based on constraints analysis performed by the media decoder 410 (FIG. 4A). The media decoder 410 may analyze parameters, such as pitch and/or gain, for example, in each frame to determine which frame is more suitable given the constraints.

Returning to step 912, when the CRC for the MMSE decoded frame is not valid, in step 918, the decoder 400 may determine whether the CRC for the burst process decoded frame is valid. When the burst process decoded frame is valid, the decoder 400 may proceed to step 920 where the burst process decoded frame is accepted.

Returning to step 918, when the CRC for the burst process decoded frame is not valid, the decoder 400 may proceed to step 910. In step 910, the decoder 400 may perform a redundancy algorithm that may be utilized to provide a decoding performance that may result in equal or reduced decoding errors than those that may occur from utilizing a standard Viterbi algorithm.

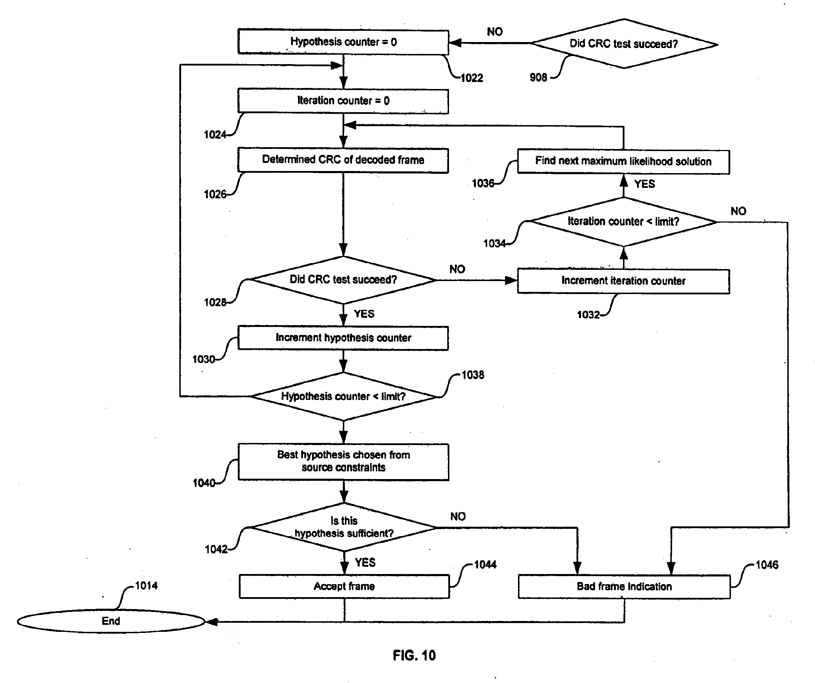

FIG. 10 is a flow diagram illustrating exemplary steps in the application of a constraint algorithm to a received frame, in accordance with an embodiment of the invention. Referring to FIG. 10, when the CRC verification test is not successful for the decoded frame in step 908 (FIG. 9), the decoder 400 (FIG. 4) may proceed to step 1022. In step 1022, a hypothesis counter may be set to an initial counter value to indicate a first hypothesis for consideration, for example. The initial counter value in step 1022 may be zero, for example. After step 1022, an iteration counter may be set to an initial counter value in step 1024 to indicate a first maximum likelihood solution, for example. The initial counter value in step 1024 may be zero, for example. In step 1026, the CRC of the decoded frame may be determined.

In step 1028, the decoder 400 may determine whether the CRC verification test was successful for the current hypothesis. When the CRC verification test is not successful, the operation may proceed to step 1032. In step 1032, the iteration counter may be incremented. After step 1032, in step 1034, the decoder 400 may determine whether the iteration counter is less than a predetermined limit. When the iteration counter is higher or equal to the predetermined limit, the operation may proceed to step 1046 where a bad frame indication is generated. When the iteration counter is less than the predetermined limit, the operation may proceed to step 1036 where a next maximum likelihood solution may be determined. After step 1036, the operation may proceed to step 1026 where the CRC of the decoded frame may be determined based on the maximum likelihood solution determined in step 1026.

Returning to step 1028, when the CRC verification test is successful, the operation may proceed to step 1030. In step 1030, the hypothesis counter may be incremented. After step 1030, in step 1038, the decoder 400 may determine whether the hypothesis counter is less than a predetermined limit. When the hypothesis counter is less than the predetermined limit, the operation may proceed to step 1024 where the iteration counter may be set to an initial value. When the hypothesis counter is equal to the predetermined limit, the operation may proceed to step 1040 where the best hypothesis may be chosen from the source constraints.

After step 1040, in step 1042, the decoder 400 may determine whether the best hypothesis chosen in step 1040 is sufficient to accept the decoded frame. When the chosen hypothesis is sufficient to accept the decoded frame, the operation may proceed to step 1044 where the decoded frame may be accepted. When the chosen hypothesis is not sufficient to accept the decoded frame, the operation may proceed to step 1046 where a bad frame indication is generated. After step 1044 or step 1046, the operation may proceed to end step 1014.

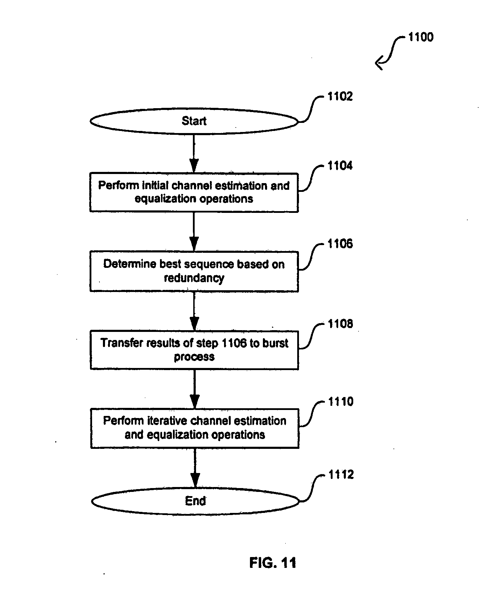

FIG. 11 is a flow diagram illustrating exemplary steps in the iterative multilayer approach for improving decoding, in accordance with an embodiment of the invention. Referring to FIG. 11, after start step 1102, in step 1104, an initial or first iteration of a channel estimation operation and of an equalization operation may be performed on received signals during a burst process portion of the multilayer decoding approach. The first iteration of the channel estimation operation and the first iteration of the equalization operation may be performed by, for example, the burst process block 402 in FIG. 4B. In step 1106, decoding of a received signal frame may be performed during the frame processing portion of the multilayer decoding approach. The frame processing may be performed by, for example, the frame process block 406 in FIG. 4B. In step 1108, at least a portion of the results generated in step 1106 by the frame process portion of the multilayer decoding approach may be transferred from, for example, the frame process block 406 to the burst process block 402 via a feedback signal. In step 1110, the burst processing may perform a second iteration of the channel estimation operation and a second iteration of the equalization operation based on the decoded results provided from the frame process portion of the multilayer decoding approach. After step 1110, the flow diagram 1100 may proceed to end step 1112. The improved results of the burst process may be further interleaved and processed by the frame process. The frame process may utilize a standard frame process or determine the best sequence that may be utilized based on, for example, redundancy.

Aspects of a method and system for an improved cellular interference cancelling diversity receiver may comprise one or more circuits that enable reception of a plurality of individual path signals associated with a multipath cluster for each of a plurality of mobile terminals. The one or more circuits may enable selection of at least a portion of the plurality of individual path signals for at least one of the plurality of mobile terminals. The one or more circuits may also enable generation of one or more intermediate decoded bit sequences based on the selection. At least one decoded output bit sequence may be generated by a frame process based on the one or more intermediate decoded bit sequences and/or a combined version of the selected at least a portion of the plurality of individual path signals.

The selecting described above may comprise multiple access interference (MAI) suppression, which may comprise minimum mean squared error (MMSE) detection, and/or successive interference cancellation (SIC) detection. The one or more circuits may enable computation of at least one channel estimate for each of the plurality of individual path signals for each of the plurality of mobile terminals. The one or more circuits may also enable computation of at least one of a feedforward matrix, and/or a feedback matrix based on the computed channel estimates. One or more matched filters may be generated based on the feedforward matrix and/or feedback matrix.

The selecting described above may be based on the one or more matched filters. The plurality of individual path signals for at least one of the plurality of mobile terminals may comprise at least 3 signals. The one or more circuits may enable combination of at least a portion of the plurality individual path signals. A received bit sequence may be generated based on the combination.

The one or more circuits may enable comparison of a redundancy verification parameter computed based on the received bit sequence, and a redundancy verification parameter computed based on the one or more intermediate decoded bit sequences. Each of the respective redundancy verification parameters may comprise a cyclical redundancy check (CRC) value. The one or more circuits may enable selection of a frame comprising the received bit sequence, and/or a frame comprising the one or more intermediate decoded bit sequence, based on the comparison. The selection may also be based on constraints analysis based on data contained in the frame comprising the received bit sequence, and/or the frame comprising the one or more intermediate decoded bit sequence. The one or more circuits may enable generation of the at least one decoded output bit sequence based on the selected frame comprising the received bit sequence, and/or the frame comprising the one or more intermediate decoded bit sequence.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

**1.** A method for signal processing, the method comprising:

receiving a plurality of individual path signals (110, 112, 114) associated with a multipath cluster (106) for each of a plurality of mobile terminals (104, 134, 144, 154);
selecting at least a portion of said plurality of individual path signals (110, 112, 114) for at least one of said plurality of mobile terminals (104, 134, 144 154);
generating at least one intermediate decoded bit sequence (MMSE Decoded Bits) based on said selecting;
**characterized in** further comprising:

generating a combined version (Rx Encoded Data) of said selected at least a portion of said plurality of individual path signals (100, 112, 114);
generating at least one decoded output bit sequence (decoded data) by a frame process (406) based on at least one of: said at least one intermediate decoded bit sequence (MMSE Decoded Bits), and said combined version (RX incoded Data) of said selected at least a portion of said plurality of individual path signals (110, 112, 114).

**2.** The method according to claim 1, wherein said selecting comprises multiple access interference (MAI) suppression.

**3.** The method according to claim 1, wherein said selecting comprises at least one of: minimum mean squared error (MMSE) detection, and successive interference cancellation (SIC) detection.

**4.** The method according to claim 1, comprising computing at least one channel estimate for each of said plurality of individual path signals (110, 112, 114) for each of said plurality of mobile terminals (104, 134, 144, 154).

**5.** The method according to claim 4, comprising computing at least one of: a feedforward matrix, and a feedback matrix based on said computed said at least one channel estimate.

**6.** The method according to claim 5, comprising generating at least one matched filter based on said at least one of: said feedforward matrix, and said feedback matrix.

**7.** A system for signal processing, the system comprising:

at least one circuit that enables reception of a plurality of individual path signals (110, 112, 114) associated with a multipath cluster (106) for each of a plurality of mobile terminals (104, 134, 144, 154);
said at least one circuit enables selection of at least a portion of said plurality of individual path signals (110, 112, 114) for at least one of said plurality of mobile terminals (104, 134, 144, 154);
said at least one circuit enables generation of at least one intermediate decoded bit sequence based on said selection; **characterized in**
**that** said least one current enables generation of a combined version of said selected of least a portion of said plurality of individual path signals (110, 112, 114); and that
said at least one circuit enables generation of at least one decoded output bit sequence by a frame process based on at least one of: said at least one intermediate decoded bit sequence, and said combined version of said selected at least a portion of said plurality of individual path signals (110, 112, 114).

**8.** The system according to claim 7, wherein said selection comprises multiple access interference (MAI) suppression.

**9.** The system according to claim 7, wherein said selection comprises at least one of: minimum mean squared error (MMSE) detection, and successive interference cancellation (SIC) detection.

**10.** The system according to claim 7, wherein said at least one circuit enables computation of at least one channel estimate for each of said plurality of individual path signals (110, 112, 114) for each of said plurality of mobile terminals (104, 134, 144, 154).

## Patentansprüche

1. Verfahren zur Signalverarbeitung, wobei das Verfahren umfasst:

   Empfangen einer Vielzahl individueller Pfadsignale (110, 112, 114), die mit einem Mehrpfad-Cluster (106) assoziiert sind, für jedes einer Vielzahl mobiler Endgeräte (104, 134, 144, 154);
   Auswählen wenigstens eines Teils der Vielzahl individueller Pfadsignale (110, 112, 114) für wenigstens eines der Vielzahl mobiler Endgeräte (104, 134, 144, 154);
   Erzeugen wenigstens einer decodierten Zwischen-Bitsequenz (MMSE decodierte Bits) basierend auf dem Auswählen;
   **dadurch gekennzeichnet, dass** es des Weiteren umfasst:

      Erzeugen einer kombinierten Version (RX codierte Daten) des wenigstens einen ausgewählten Teils der Vielzahl individueller Pfadsignale (110, 112, 114);
      Erzeugen wenigstens einer decodierten Ausgangsbitsequenz (decodierte Daten) durch einen Frame-Prozess (406) basierend auf wenigstens einem von: der wenigstens einen decodierten Zwischen-Bitsequenz (MMSE decodierte Bits) und der kombinierten Version (RX codierte Daten) des wenigstens einen ausgewählten Teils der Vielzahl individueller Pfadsignale (110, 112, 114).

2. Verfahren nach Anspruch 1, wobei das Auswählen Multiple Access Interference (MAI; Mehrfachzugriffsinterferenz) -Unterdrückung umfasst.

3. Verfahren nach Anspruch 1, wobei das Auswählen wenigstens eines umfasst von: Minimum Mean Squared Error (MMSE; minimale mittlere quadratische Abweichung) -Ermittlung und Successive Interference Cancellation (SIC; sukzessive Interferenzbeseitigung) -Ermittlung.

4. Verfahren nach Anspruch 1, das das Berechnen wenigstens einer Kanalschätzung für jedes der Vielzahl individueller Pfadsignale (110, 112, 114) für jedes der Vielzahl mobiler Endgeräte (104, 134, 144, 154) umfasst.

5. Verfahren nach Anspruch 4, das das Berechnen wenigstens eines umfasst von: einer Vorwärtskopplungsmatrix und einer Rückkopplungsmatrix, basierend auf der wenigstens einen berechneten Kanalschätzung.

6. Verfahren nach Anspruch 5, das das Erzeugen wenigstens eines Optimalfilters (Matched Filter) basierend auf wenigstens einem von der Vorwärtskopplungsmatrix und der Rückkopplungsmatrix umfasst.

7. System zur Signalverarbeitung, wobei das System aufweist:

   wenigstens eine Schaltung, die den Empfang einer Vielzahl individueller Pfadsignale (110, 112, 114), die mit einem Mehrpfad-Cluster (106) assoziiert sind, für jedes einer Vielzahl mobiler Endgeräte (104, 134, 144, 154) ermöglicht;
   wobei die wenigstens eine Schaltung das Auswählen wenigstens eines Teils der Vielzahl individueller Pfadsignale (110, 112, 114) für wenigstens eines der Vielzahl mobiler Endgeräte (104, 134, 144, 154) ermöglicht;
   wobei die wenigstens eine Schaltung das Erzeugen wenigstens einer decodierten Zwischen-Bitsequenz basierend auf dem Auswählen ermöglicht;
   **dadurch gekennzeichnet, dass**
   die wenigstens eine Schaltung das Erzeugen einer kombinierten Version des wenigstens einen ausgewählten Teils der Vielzahl individueller Pfadsignale (110, 112, 114) ermöglicht; und
   die wenigstens eines Schaltung das Erzeugen wenigstens einer decodierten Ausgangsbitsequenz durch einen Frame-Prozess basierend auf wenigstens einem von: der wenigstens einen decodierten Zwischen-Bitsequenz und der kombinierten Version des wenigstens einen ausgewählten Teils der Vielzahl individueller Pfadsignale (110, 112, 114) ermöglicht.

8. System nach Anspruch 7, wobei das Auswählen Multiple Access Interference (MAI; Mehrfachzugriffsinterferenz) -Unterdrückung umfasst.

**9.** System nach Anspruch 7, wobei das Auswählen wenigstens eines umfasst von: Minimum Mean Squared Error (MMSE; minimale mittlere quadratische Abweichung) -Ermittlung und Successive Interference Cancellation (SIC; sukzessive Interferenzbeseitigung) -Ermittlung.

**10.** System nach Anspruch 7, wobei die wenigstens eine Schaltung das Berechnen wenigstens einer Kanalschätzung für jedes der Vielzahl individueller Pfadsignale (110, 112, 114) für jedes der Vielzahl mobiler Endgeräte (104, 134, 144, 154) ermöglicht.

## Revendications

**1.** Procédé de traitement de signaux, le procédé comprenant :

la réception d'une pluralité de signaux (110, 112, 114) de voies individuelles associés avec un bloc multivoie (106) pour chacun d'une pluralité de terminaux mobiles (104, 134, 144, 154) ;
la sélection d'au moins une partie de ladite pluralité de signaux (110, 112, 114) de voies individuelles pour au moins un de ladite pluralité de terminaux mobiles (104, 134, 144, 154) ;
la génération d'au moins une séquence de bits intermédiaire décodée (bits décodés MMSE) sur la base de ladite sélection ;
**caractérisé en ce que** comprenant en outre :

la génération d'une version combinée (données encodées Rx) de ladite au moins une partie sélectionnée de ladite pluralité de signaux (110, 112, 114) de voies individuelles;
la génération d'au moins une séquence de bits de sortie décodée (données décodées) par un procédé sur les trames (406) sur la base d'au moins une parmi : ladite au moins une séquence de bits intermédiaire décodée (bits décodés MMSE), et ladite version combinée (données encodées Rx) de ladite au moins une partie sélectionnée de ladite pluralité de signaux (110, 112, 114) de voies individuelles.

**2.** Procédé selon la revendication 1, dans lequel ladite sélection comprend une suppression d'interférences d'accès multiples (MAI).

**3.** Procédé selon la revendication 1, dans lequel ladite sélection comprend au moins une parmi : une détection de l'erreur quadratique moyenne minimale (MMSE), et une détection d'annulation d'interférences successives (SIC).

**4.** Procédé selon la revendication 1, comprenant le calcul d'au moins une estimation de canal pour chacun de ladite pluralité de signaux (110, 112, 114) de voies individuelles pour chacun de ladite pluralité de terminaux mobiles (104, 134, 144, 154).

**5.** Procédé selon la revendication 4, comprenant le calcul d'au moins une parmi : une matrice de correction aval, et une matrice de rétroaction sur la base de ladite au moins une estimation de canal calculée.

**6.** Procédé selon la revendication 5, comprenant la génération d'au moins un filtre adapté sur la base de ladite au moins une parmi : ladite matrice de correction aval, et ladite matrice de rétroaction.

**7.** Système de traitement de signaux, le système comprenant :

au moins un circuit qui permet une réception d'une pluralité de signaux (110, 112, 114) de voies individuelles associés avec un bloc multivoie (106) pour chacun d'une pluralité de terminaux mobiles (104, 134, 144, 154) ;
ledit au moins un circuit permet la sélection d'au moins une partie de ladite pluralité de signaux (110, 112, 114) de voies individuelles pour au moins un de ladite pluralité de terminaux mobiles (104, 134, 144, 154) ;
ledit au moins un circuit permet la génération d'au moins une séquence de bits intermédiaire décodée sur la base de ladite sélection ; **caractérisé en ce que**
ledit au moins un circuit permet la génération d'une version combinée de ladite au moins une partie sélectionnée de ladite pluralité de signaux (110, 112, 114) de voies individuelles; et **en ce que**
ledit au moins un circuit permet la génération d'au moins une séquence de bits de sortie décodée par un procédé sur les trames sur la base d'au moins une parmi : ladite au moins une séquence de bits intermédiaire décodée, et ladite version combinée de ladite au moins une partie sélectionnée de ladite pluralité de signaux (110, 112, 114) de voies individuelles.

8. Système selon la revendication 7, dans lequel ladite sélection comprend une suppression d'interférences d'accès multiples (MAI).

9. Système selon la revendication 7, dans lequel ladite sélection comprend au moins une parmi : une détection de l'erreur quadratique moyenne minimale (MMSE), et une détection d'annulation d'interférences successives (SIC).

10. Système selon la revendication 7, dans lequel ledit au moins un circuit permet le calcul d'au moins une estimation de canal pour chacun de ladite pluralité de signaux (110, 112, 114) de voies individuelles pour chacun de ladite pluralité de terminaux mobiles (104, 134, 144, 154).

Base Station
102
rx1
rx2
rxn
122
124
126
106
112
110
114
House
Line of Sight
104

FIG. 1A

Base Station
102
122
124
126
$Rx_1$
$Rx_2$
$Rx_n$
134
144
154

FIG. 1B

Decoder
234
Rx
Encoded
Data
Base
Station
204
232
Demodulation
& Diversity
Processing
220
222
224
$rx_1$
$rx_2$
$rx_n$
240
242
244
210
Mobile
Terminal
218
Modulator
& Tx
216
Channel
Coding
202
214
Interleaving
&
Formatting
212
Voice
Coding
Audio

FIG. 2

304
330
332
RF Filtering & Demodulation
334
RF Filtering & Demodulation
336
RF Filtering & Demodulation
340
342
ADC
344
ADC
346
ADC
350
352
Digital Filtering
354
Digital Filtering
356
Digital Filtering
360
362
Channel Estimation
364
Channel Estimation
366
Channel Estimation
370
MRC
Rx Encoded Data
372
MMSE
MMSE Decoded Bits
310
312
314
320
322
324
$rx_1$
$rx_2$
$rx_n$
Demodulation and Diversity Processing

FIG. 3

400
MMSE Decoded Bits
RX Encoded Data
402
Burst process block
Burst Process Decoded Bits
420
Decision Block
404
De-interleaver
406
Frame process block
Channel decoder
408
Media decoder
410
Decoded data

FIG. 4A

400
Decoded data
406
Frame process block
Media decoder
410
Channel decoder
408
De-interleaver
404
Integrated Burst process and Decision block
420
Decision Block
Burst Process Decoded Bits
402
Burst process block
MMSE Decoded Bits
RX Encoded Data

FIG. 4B

MMSE Decoded Bits
RX Encoded Data
Burst processing block
402
Decision Block
420
De-interleaver
404
Processor
512
Memory
514
Channel decoder
408
Media decoder
410
Decoded data

FIG. 5

Frame processing
Burst processing
620
Frame N – 1
Frame N
Frame N + 1
0
1
2
3
4
5
6
7
Burst 0
Burst 1
Burst 2
Burst 3
Burst 4
Burst 5
Burst 6
Burst 7
602
TB
604
Data bits
606
F
608
midamble
610
Data bits
612
F
614
TB
616
GP
600

FIG. 6A

Frame processing
Burst processing
Frame N – 1
Frame N
Frame N + 1
0 1 2 3 4 5 6 7
0 1 2 3 4 5 6 7
0 1 2 3 4 5 6 7
620
Burst 0
Burst 1
Burst 2
Burst 3
Burst 4
Burst 5
Burst 6
Burst 7
600

FIG. 6B

Decoded data
Frame process block
406
Media decoder
410
Channel decoder
408
702
Storage
404
De-interleaver
420
Decision Block
402
Burst process block
704
Channel estimator
Equalizer (MLSE)
706
MMSE Decoded Bits
RX Encoded Data

FIG. 7

Encoded data
Burst process block
Channel estimator
704
Equalizer (MLSE)
706
402
First iteration
Second iteration
$\Lambda_{OLD}$
S(m)
Channel estimator
802
Sign
808
$\mu$
810
Signal estimator
804
S(m)
W(m)
+
-
814
Match filter
806
+
816
$E_{SYM}$
812
1/sigma$^2$
818
$\Lambda_{NEW}$

FIG. 8

Compute Channel Estimates
900
Generate Received Frame By Combining Signals Based on Maximal Ratio Combining
902
Decode received frame using burst process
904
Generate decoded bits using MMSE
908
Determine CRC for burst process decoded frame
906
Determine CRC for MMSE decoded frame
910
MMSE CRC Valid?
912
NO
YES
Burst Process CRC Valid?
914
YES
NO
Burst Process CRC Valid?
918
NO
YES
916
Accept MMSE decoded frame
920
Accept burst process decoded frame
Accept burst process decoded frame or MMSE decoded frame based on constraints analysis
924
922
Apply constraint algorithm to received frame

FIG. 9

Did CRC test succeed?
908
NO
Hypothesis counter = 0
1022
Iteration counter = 0
1024
Determined CRC of decoded frame
1026
Did CRC test succeed?
1028
YES
NO
Increment hypothesis counter
1030
Hypothesis counter < limit?
1038
Best hypothesis chosen from source constraints
1040
Is this hypothesis sufficient?
1042
YES
NO
Accept frame
1044
End
1014
Find next maximum likelihood solution
1036
YES
Iteration counter < limit?
1034
NO
Increment iteration counter
1032
Bad frame indication
1046

FIG. 10

1100
1102
Start
1104
Perform initial channel estimation and equalization operations
1106
Determine best sequence based on redundancy
1108
Transfer results of step 1106 to burst process
1110
Perform iterative channel estimation and equalization operations
1112
End

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 60759833 B
- US 11189509 B
- US 11189634 B
- WO 2004102889 A1
- US 20060189352 A1
- US 6144669 A